(19) **Europäisches Patentamt / European Patent Office / Office européen des brevets**

(11) **EP 4 589 275 A1**

(12) # EUROPEAN PATENT APPLICATION

(43) Date of publication:
**23.07.2025  Bulletin 2025/30**

(21) Application number: **24220380.0**

(22) Date of filing: **16.12.2024**

(51) International Patent Classification (IPC):
**G01M 1/02** *(2006.01)*   **G01M 1/22** *(2006.01)*
**F16P 3/08** *(2006.01)*

(52) Cooperative Patent Classification (CPC):
**G01M 1/02; F16P 3/08; G01M 1/225**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024  IT 202400000819**

(71) Applicant: **VEHICLE SERVICE GROUP ITALY S.R.L.**
**44020 Ostellato (FE) (IT)**

(72) Inventors:
- **PISANO, Martina**
  **10136 Torino (IT)**
- **PELLACANI, Gianfranco**
  **42015 Correggio (RE) (IT)**
- **MAMBRILLA, Massimo**
  **10060 Scalenghe (TO) (IT)**
- **ELLIOTT, Robert,William**
  **Madison, IN 47250 (US)**
- **FISICHELLA, Luca**
  **41030 Bomporto (MO) (IT)**
- **PENNELLA, Giuseppe**
  **42017 Novellara (RE) (IT)**
- **VUOCOLO, Antonello**
  **84020 Colliano (SA) (IT)**

(74) Representative: **PGA S.p.A., Milano, Succursale di Lugano**
**Via Castagnola, 21c**
**6900 Lugano (CH)**

(54) **WHEEL BALANCING APPARATUS**

(57)    A wheel balancing apparatus comprising a wheel hub (2) movable by rotation about its own rotation axis (R), said wheel hub (2) being configured to removably engage a wheel and rotate said wheel about said rotation axis (R), and a safety cover (3) comprising at least one active portion (4) movable towards and away from said wheel hub (2) between a distal position and a proximal position. The balancing apparatus comprises a locking system (10) of the safety cover (3).

EP 4 589 275 A1

**Description**

FIELD OF INVENTION

The object of the present invention is a wheel balancing apparatus, such as wheels for motor vehicles, motorcycles, trucks, commercial vehicles or the like. It is also object of the present invention a method for balancing wheels using a balancing apparatus.

STATE OF THE ART

Known balancing apparatus is used to determine and adjust imbalances of a vehicle wheel. Wheel balancing is performed by an operator by adding or removing weights at specific locations on the wheel rim. In particular, the wheel is removed from the vehicle, mounted on a balancing apparatus support hub, and rotated: the apparatus is then configured to detect vibrations during wheel rotation originating from an imbalance. Known balancing apparatus such as, for example, described in the U.S. Application No. US2018120188A1 comprises a cover designed to at least partially cover the wheel to protect the operator. The known covers are movable between a raised position that allows mounting and removal of the wheel from the hub of the apparatus, and a lowered position wherein protection at least partially covers the wheel when mounted on the hub of the apparatus. However, the Applicant has noted some limitations of known balancing apparatus that reduce the safety level for the operator.

SCOPE OF THE INVENTION

It is therefore the purpose of the present invention to solve at least one of the drawbacks and/or limitations of the previous solutions.
A first objective is to make available a wheel balancing apparatus with a high level of safety, particularly one that can effectively protect the operator during wheel balancing operations, but without negatively impacting on the ease of operating the apparatus.
These purposes, which will appear more from the following description, are basically achieved by a wheel balancing apparatus and a balancing method in accordance with one or more of the attached claims.

SUMMARY

In a 1st aspect a balancing apparatus (1) for wheels is provided, said balancing apparatus comprising:

  a wheel hub (2) movable by rotation about its own rotation axis (R), said wheel hub (2) being configured to removably engage a wheel and put said wheel in rotation about said rotation axis (R),
  a safety cover (3) for the wheel, said safety cover (3) comprising at least an active portion (4) movable towards and away from said wheel hub (2) between a distal position and a proximal position,
at least one control unit (20) configured to control a lock (10), activable on said safety cover (3), between:

    a lock position, where the lock (10) is configured to prevent the safety cover (3) (optionally of the active portion) from moving from the proximal position to the distal position, and
    an unlock position, where the lock (10) is configured to allow the safety cover (3) (optionally of the active portion) to move from the proximal position to the distal position.

In an aspect 1bis according to the preceding aspect, the balancing apparatus comprises a locking system (10) movable at least between:

    a lock position, where the locking system (10) is configured to prevent the safety cover (3) (optionally of the active portion) from moving from the proximal position to the distal position, and
    an unlock position, where the locking system (10) is configured to allow the safety cover (3) (optionally the active portion) to move from the proximal position to the distal position.

In a 2nd aspect, a balancing apparatus (1) for wheels is provided, said balancing apparatus comprising:

    a wheel hub (2) movable by rotation about its own rotation axis (R), said wheel hub (2) being configured to removably engage a wheel and put said wheel in rotation about said rotation axis (R),
    a safety cover (3) for the wheel, said safety cover (3) comprising at least an active portion (4) movable towards and away from said wheel hub (2) between a distal position and a proximal position,
    a locking system (10) activable on said safety cover (3) and movable between:

      a lock position, wherein the locking system (10) is configured to prevent the safety cover (3) (optionally of the active portion 4) from moving from the proximal position to the distal position, and
      an unlock position, wherein the locking system (10) is configured to allow movement of the safety cover (3) (optionally of the active portion 4) from the proximal position to the distal position.

In a 3rd aspect according to any one of the preceding aspects, the balancing apparatus (1) is configured to perform a safety procedure (100) comprises at least one step of automatically moving the locking system (10) from the unlock position to the lock position at least in one operating condition of the balancing apparatus.

In a 4th aspect according to the preceding aspect, said balancing apparatus operating condition comprises said wheel hub (2) rotating about its rotation axis (R). In a 5th aspect according to any one of the preceding aspects from 2nd to 4th, said balancing apparatus comprises at least one control unit (20) configured to perform said safety procedure (100). In a 6th aspect according to any one of the preceding aspects from the 2nd to the 4th, said balancing apparatus comprises a passive system configured to perform said safety procedure (100). In a 7th aspect according to any one of the preceding aspects from 2nd to 5th, said balancing apparatus comprises at least one rotation sensor (30) configured to emit a rotation signal representative of a rotation of said wheel hub (2) about its rotation axis (R). In an 8th aspect according to the preceding aspect, the safety procedure (100) comprises:

receive (101) input said rotation signal from the rotation sensor (30),
based on said rotation signal, calculate (102) a rotation parameter of the wheel hub (2), optionally said rotation parameter comprises a rotation speed of the wheel hub (2) or an angular momentum of the wheel mounted on the wheel hub (2),

if said wheel hub rotation parameter (2) is greater than a respective predefined threshold, move (103) the locking system (10) from the unlock position to the lock position.

In an aspect 8bis according to the preceding aspect, the safety procedure (100), performed by the control unit, comprises the steps of:

receive (101) the rotation signal emitted by the rotation sensor (30) as input,
based on said rotation signal, calculate (102) at least one value of a wheel hub rotation parameter (2), compare the calculated rotation parameter value with at least one threshold value,

if the value of the wheel hub rotation parameter (2) is greater than the threshold value, move (103) the locking system (10) from the unlock position to the lock position.

In an aspect 8ter according to aspect 8th or 8bis the rotation parameter comprises at least one of: a rotational speed of the wheel hub (2), an angular momentum of the wheel mounted on the wheel hub (2).

In a 9th aspect according to any one of the aspects from 8th to 8ter, the rotation parameter includes the angular momentum of the wheel mounted on the wheel hub (2), wherein the control unit (20) is configured to calculate said angular momentum of the wheel based on an angular speed of the wheel. In a 10th aspect according to any one of aspects 8th to 9th, the control unit (20) is configured to calculate said angular momentum of the wheel based on an angular speed of the wheel, an overall mass of the wheel, and a radius of said wheel. In an 11th aspect according to any one of aspects 8th to 10th, the rotation parameter includes the wheel hub rotation speed (2), wherein the control unit (20) is configured to calculate said wheel rotation speed based on the rotation signal. In a 12th aspect according to any one of the preceding aspects from the 3rd to the 11th, the safety procedure (100) comprises moving, if said wheel hub rotation parameter (2) is less than said predefined threshold, the locking system (10) from the lock position to the unlock position. In an aspect 13th according to any one of the preceding aspects 8 to 12, said rotation parameter comprises a wheel hub rotation speed (2). In an aspect 13bis according to the preceding aspect, the predefined threshold, optionally the threshold value, is between 10 RPM and 12 RPM. In a 14th aspect according to the 13th or 13bis aspect said predefined threshold, optionally the threshold value, is substantially 11 RPM.

In a 15th aspect according to any one of the preceding aspects from 8th to 12th, said rotation parameter comprises the angular momentum of the wheel mounted on the wheel hub (2). In an aspect 15bis according to the preceding aspect said predefined threshold, optionally the threshold value, is between 30 $kg{*}m^2$ /s and 45 $kg{*}m^2$ /s. In a 16th aspect according to the 15th or 15bis aspect, said predefined threshold, optionally the threshold value, is between 35 $kg{*}m^2$ Is and 40 $kg{*}m^2$ /s, optionally substantially is 37 $kg{*}m^2$ /s.

In an aspect 17th according to any one of the preceding aspects from 8th to 16th, said control unit (20), optionally a second control unit (22), is configured to perform an auxiliary safety procedure (104) comprising at least the following steps:

verify (105) the existence of a safe condition,
if the safety condition is met, allow (106) said rotation parameter to exceed a predefined auxiliary threshold, said predefined auxiliary threshold being greater than said predefined threshold.

In an 18th aspect according to the preceding aspect, the auxiliary safety procedure (104) comprises of preventing (107) said rotation parameter from exceeding a predefined auxiliary threshold and/or issuing an alarm signal if the safety condition is not met.

In an aspect 19th according to the 17th or 18th aspect, said safety condition is verified at least when the safety cover (3) (optionally of the active portion 4) is arranged in the proximal position.

In an aspect 19a according to any one of the preceding aspects from 17th to 19th, the control unit (20) is configured to perform the auxiliary safety procedure (104) after the safety procedure (100), optionally following the safety procedure.

In a 20th aspect according to any one of the preceding aspects, said control unit (20), optionally a second control unit (22), is configured to perform an auxiliary safety verification (204) (optionally a safety verification procedure performed by the control unit) comprising at least the following steps:

> if the wheel hub rotation parameter (2) is greater than a predefined auxiliary threshold, verify (205) that a safe condition exists,
> wherein said predefined auxiliary threshold is greater than said predefined threshold,
> if the safety condition is met, allow (206) a rotation of the wheel hub (2) beyond said predefined auxiliary threshold.

In a 21st aspect according to the preceding aspect, the auxiliary safety verification (204) (optionally an auxiliary safety verification procedure performed by the control unit) comprises to prevent (207) the wheel hub (2) from rotating beyond predefined auxiliary threshold and/or emit an alarm signal, if the safety condition is not met.

In a 22nd aspect according to the 20th or 21st aspect, said safety condition is verified at least when the safety cover (3) (optionally of the active portion 4) is arranged in the proximal position.

In a 23rd aspect according to any one of the preceding aspects from 17th to 22nd, said rotation parameter comprises the rotation speed of the wheel hub (2), optionally said predefined auxiliary threshold is between 12 and 14 RPM. In a 24th aspect according to the preceding aspect, said predefined auxiliary threshold is basically 13 RPM. In a 25th aspect according to any one of the preceding aspects from 17th to 22nd, said rotation parameter comprises the angular momentum of the wheel mounted on the wheel hub (2), optionally said predefined auxiliary threshold is between $35 \, kg{*}m^2/s$ and $53 \, kg{*}m^2/s$. In a 26th aspect according to the preceding aspect, said predefined auxiliary threshold is between $41 \, kg{*}m^2/s$ and $47 \, kg{*}m^2/s$, optionally substantially equal to $44 \, kg{*}m^2/s$.

In an aspect 26a according to any one of the preceding aspects from 20th to 26th, the control unit (20) is configured to perform the auxiliary safety verification (204) (optionally the verification procedure) downstream (optionally, following) the safety procedure (100). In an aspect 26b according to any one of the preceding aspects from 17th to the aspect 26a, said predefined auxiliary threshold is at least 15% higher than said predefined threshold. In an aspect 26c according to any one of the preceding aspects from 17th to aspect 26b, a ratio of said predefined auxiliary threshold to said predefined threshold is between 1.15 and 2, optionally between 1.15 and 1.5, even more optionally said ratio being substantially equal to 1.2.

In a 27th aspect according to any one of the preceding aspects, said balancing apparatus comprises an electric motor (6) operatively connected to said wheel hub (2) and configured to put said wheel hub (2) in rotation. In a 28th aspect according to any one of the preceding aspects, said control unit (20) is configured to control said electric motor (6).

In a 29th aspect according to the aspect 27th or 28th, the step of preventing said rotation parameter from exceeding said predefined auxiliary threshold comprises commanding, by means of said control unit (20), said electric motor (6) of the balancing apparatus. In a 30th aspect according to any one of the preceding aspects from 27th to 29th, the step of preventing said rotation parameter from exceeding said predefined auxiliary threshold comprises commanding, by means of said control unit (20), a rotation speed of said electric motor (6). In a 31st aspect according to any one of the preceding aspects from 27th to 30th, the step of preventing said rotation parameter from exceeding said predefined auxiliary threshold comprises commanding, by means of said control unit (20), to interrupt a power supply of said electric motor (6). In a 32nd aspect according to the preceding aspect, the step of preventing said rotation parameter from exceeding said predefined auxiliary threshold comprises commanding an opening of an electrical contact to interrupt an electrical supply to said electric motor (6). In a 33rd aspect according to the preceding aspect, said electrical contact is a relay.

In a 34th aspect according to any one of the preceding aspects from 27th to 33rd, the step of allowing said rotation parameter to exceed said predefined auxiliary threshold comprises controlling, by means of said control unit (20), said electric motor (6) of the balancing apparatus.

In a 35th aspect according to any one of the preceding aspects from 27th to 34th, the step of allowing said rotation parameter to exceed said predefined auxiliary threshold comprises commanding a rotation speed of said electric motor (6). In a 36th aspect according to any one of the preceding aspects from 27th to 35th, the safety condition is verified when said electric motor (6) is electrically powered. In a 37th aspect according to any one of the preceding aspects from the 17th to the 36th, the safety condition is verified when the locking system (10) is placed in the lock position. In a 38th aspect according to any one of the preceding aspects from 17th to 37th, the safety condition is verified when the locking system (10) is electrically powered. In a 39th aspect according to any one of the preceding aspects from 17th to 38th, if the safety condition is not verified, the control unit (20) is configured to activate an alarm, optionally said alarm being an audible and/or light alarm.

In a 40th aspect according to any one of the preceding aspects, the control unit (20) is configured to perform a repositioning procedure (300) when the safety cover (3) (optionally of the active portion 4) is in the distal position. In a 41st aspect according to the preceding aspect, said repositioning procedure (300) comprises at least the following steps:

detect the rotation parameter of the wheel hub (2), if the rotation parameter is greater than the predefined threshold along a wheel hub (2) angular rotation greater than a respective angular threshold, prevent a wheel hub (2) from rotating and/or emit an alarm signal.

In a 42nd aspect according to the preceding aspect, said repositioning procedure (300) comprises of allowing a rotation of the wheel hub if the rotation parameter is greater than the predefined threshold along an angular rotation of the wheel hub (2) less than said angular threshold.

In a 43rd aspect according to the 41st or 42nd aspect, said angular threshold is between 120° and 360°. In a 44th aspect according to any one of the preceding aspects from 41st to 43rd, said angular threshold is between 160° and 200°. In a 45th aspect according to any one of the preceding aspects from 41st to 44th, said angular threshold is substantially equal to 180°.

In a 46th aspect according to any one of the preceding aspects from 40th to 45th, the repositioning procedure (300) further comprises:

determine whether the electric motor actively determines said rotation of the wheel hub (2), if it is determined that the electric motor determines said rotation of the wheel hub (2) and if the rotation parameter is greater than the predefined threshold along an angular rotation of the wheel hub (2) greater than the respective angular threshold, prevent the wheel hub (2) from rotating and/or emit the alarm signal.

In a 47th aspect according to any one of the preceding aspects, the control unit (20) is configured to perform an initialization procedure (400) when the safety cover (3) (optionally of the active portion 4) is in the distal position, said initialization procedure (400) comprises at least the following steps:

determine whether the electric motor actively determines said rotation of the wheel hub (2), If it is determined that the electric motor does not determine said rotation of the wheel hub (2), allow a rotation of the wheel hub (2), if it is determined that the electric motor causes said rotation of the wheel hub (2), prevent the wheel hub (2) from rotating and/or emit an alarm signal.

In a 48th aspect according to the 46th or 47th aspect, the step of determining whether the electric motor actively determines said wheel hub rotation (2) comprises checking whether the electric motor is electrically powered, wherein:

if it is verified that the electric motor is not electrically powered, the control unit is configured to detect that said electric motor does not determine said wheel hub rotation (2), if it is verified that the electric motor is electrically powered, the control unit is configured to detect that said electric motor determines said rotation of the wheel hub (2).

In a 49th aspect according to any one of the preceding aspects from 46th to 48th, the step of detect whether the electric motor actively determines said rotation of the wheel hub (2) comprises detecting a current generated by the electric motor resulting from said rotation of the wheel hub (2), wherein if said current generated by the electric motor (6) is detected and optionally if said current is directed in the opposite direction to a supply current of the electric motor (6), the control unit (20) is configured to detect that said electric motor does not determine said rotation of the wheel hub (2).

In an aspect 49a according to any one of the preceding aspects from 41st to 49th, the step of preventing a rotation of the wheel hub (2) comprises to interrupt a power supply to the electric motor (6).

In an aspect 49b according to any one of the preceding aspects from 47th to the aspect 49a, if it is detected that the electric motor does not determine said rotation of the wheel hub (2), the initialization procedure (400) comprises to allow a rotation of the wheel hub (2) beyond the predefined threshold.

In a 50th aspect according to any one of the preceding aspects, said balancing apparatus (1) comprises a lock sensor (17), operatively connected to the control unit (20), configured to emit a signal representative of a position of the locking system (10) between the lock position and the unlock position.

In a 51st aspect according to any one of the preceding aspects, said balancing apparatus (1) comprises a lock sensor (17), operatively connected to the control unit (20), configured to emit a signal representative of whether the locking system (10) is in the lock position or the unlock position.

In a 52nd aspect according to any one of the preceding aspects, said apparatus comprises at least one closure detector (18) configured to selectively emit a signal representative of whether the safety cover (3) (optionally of the active portion 4) is in the proximal position or distal position of the safety cover (3).

In a 53rd aspect according to the preceding aspect, said control unit (20), optionally a second control unit (22), is operationally connected with the at least one closure detector (18) and configured to:

receive said signal from said closure detector (18), determine a position of the safety cover (3) (optionally of the active portion 4) between the proximal and distal positions.

In a 54th aspect according to the 52nd or 53rd aspect, said control unit (20), optionally a second control unit (22), is operationally connected with the at least one closure detector (18) and configured to:

receive said signal from said closure detector (18), determine whether the safety cover (3) (optionally of the active portion 4) is in the proximal or distal position. In a 55th aspect according to any one of the preceding aspects, said control unit (20), optionally a second control unit (22), is configured to initiate the safety procedure (100) if the safety cover (3) (optionally of the active portion 4) is in the proximal position.

In a 56th aspect according to any one of the preceding aspects from the 3rd to the 55th, said control unit (20), optionally a second control unit (22), is configured to start the safety procedure (100) only if the safety cover (3) (optionally of the active portion 4) is in the proximal position.

In a 57th aspect according to any one of the preceding aspects, said control unit (20), optionally called the second control unit (22), is configured to:

verify (90) a position of the safety cover (3) (optionally of the active portion 4) between the proximal and distal positions, allow the locking system (10) to move (103) to the lock position if the control unit (20) has determined that the safety cover (3) (optionally of the active portion 4) is in the proximal position.

In a 58th aspect according to any one of the preceding aspects, said control unit (20), optionally said second control unit (22), is configured to interdict the locking system from moving to the lock position if the control unit (20) has determined that the safety cover (3) (optionally of the active portion 4) is in the distal position. In a 59th aspect according to any one of the preceding aspects, if the control unit (20) has determined that the safety cover (3) (optionally of the active portion 4) is in the distal position, the control unit (20) is configured to perform at least one of the repositioning procedure (300) and the initialization procedure (400).

In a 60th aspect according to any one of the preceding aspects, the control unit (20) is configured to:

allow said rotation parameter to exceed the predefined threshold if the control unit (20) has determined that the safety cover (3) (optionally of the active portion 4) is in the proximal position, interdict that said rotation parameter exceeds said predefined threshold if the control unit (20) has determined that the safety cover (3) (optionally of the active portion 4) is in the distal position.

In a 61st aspect according to any one of the preceding aspects, the control unit (20) is configured to:

verify (90) a position of the safety cover (3) (optionally of the active portion 4) between the proximal and distal positions, allow the electric motor (6) to rotate said wheel hub (2) if the control unit (20) has determined that the safety cover (3) (optionally of the active portion 4) is in the proximal position.

In a 62nd aspect according to the preceding aspect, the control unit (20) is configured to interdict said electric motor (6) from rotating said wheel hub (2) if the control unit (20) has determined that the safety cover (3) (optionally of the active portion 4) is in the distal position.

In a 63rd aspect according to any one of the preceding aspects from 8th to 10th, 15th, and 25th, said angular momentum is a function of a wheel mass, a wheel radius, and a wheel hub rotational speed,

Wherein said angular momentum is calculated according to the following equation:

$$L = 0{,}105 \cdot r \cdot m \cdot R^2$$

where:

L is called angular momentum optionally expressed in $\left[ kg\,\frac{m^2}{s} \right]$;
r is the rotation speed of the wheel optionally expressed in rotations per minute RPM;
m is the mass of the wheel optionally expressed in kg;
R is the maximum radius of the wheel optionally expressed in meters.

In a 64th aspect according to any one of the preceding aspects, said control unit (20) comprises a first control unit (21) and a second control unit (22). In a 65th aspect according to the preceding aspect, the first control unit (21) is configured to control, optionally to control the speed, the electric motor (6) operatively connected to the wheel hub (2). In a 66th aspect according to the 64th or 65th aspect, the first control unit (21) is digital. In a 67th aspect according to any one of the preceding aspects from 64th to 66th, the second control unit (22) is of the analog type. In a 68th aspect according to any one of the preceding aspects from 64th to 67th, the second control unit (22) is configured to move the locking system (10) between the unlock position and the lock position. In a 69th aspect according to any one of the preceding aspects from the 64th to the 68th, the second control unit (22) is configured to perform the safety procedure (100). In a 70th aspect according to any one of the preceding aspects from 64th to 69th, the second control unit (22) is configured to:

receive the rotation signal from the rotation sensor (30),

based on said rotation signal, calculate the wheel hub rotation parameter (2),

if said wheel hub rotation parameter (2) is greater than the respective predefined threshold, move (103) the locking system (10) from the unlock position to the lock position,

optionally if said wheel hub rotation parameter (2) is less than said respective predefined threshold, move the locking system (10) from the lock position to the unlock position.

In a 71st aspect according to any one of the preceding aspects from 64th to 70th, the second control unit (22) is configured to:

receive from the lock sensor (17) a locking signal representative of the position assumed by the locking system (10) between the lock position and the unlock position,

determine, based on said locking signal, whether the locking system (10) is in the lock position or the unlock position.

In a 72nd aspect according to any one of the preceding aspects from 64th to 71st, the second control unit (22) is configured to selectively allow and interdict an electric power supply to the electric motor (6) of the wheel hub (2). In a 73rd aspect according to any one of the preceding aspects from 64th to 72nd, the second control unit (22) is configured to perform the initialization procedure (400). In a 74th aspect according to any one of the preceding aspects from the 64th to the 73rd, the second control unit (22) is configured to perform the repositioning procedure (300). In a 75th aspect according to any one of the preceding aspects from the 64th to the 74th, the first control unit (21) is configured to perform the initialization procedure (400). In a 76th aspect according to any one of the preceding aspects from the 64th to the 72nd and 75th aspect, the first control unit (21) is configured to perform the repositioning procedure (300). In a 77th aspect according to any one of the preceding aspects from 64th to 76th, the locking system (10) is controlled by said second control unit (22) only. In a 78th aspect according to any one of the preceding aspects from 64th to 77th, the second control unit (22) is configured to perform the auxiliary safety procedure (104). In a 79th aspect according to any one of the preceding aspects from 64th to 78th, the second control unit (22) is configured to perform the auxiliary safety verification (204). In an 80th aspect according to any one of the preceding aspects from 64th to 79th, the first control unit (21) is configured to perform a wheel balancing procedure. In an 81st aspect according to any one of the preceding aspects, said balancing apparatus comprises a wheel imbalance detector configured to emit a balancing signal representative of a wheel imbalance. In an 82nd aspect according to any one of the preceding aspects, said control unit (20), and optionally said first control unit (21), is configured to perform a wheel balancing procedure based on said balancing signal, said balancing procedure comprising:

calculate an imbalance of the wheel during one of its rotations based on the balancing signal,

indicate a position on the wheel on which to affix one or more balancing weights.

In an aspect 82a according to the preceding aspect, wherein said balancing procedure comprises placing said wheel hub (2) in rotation by controlling a rotation of the electric motor (6). In an aspect 82b according to the aspect from 82nd or 82a, said control unit (20), and optionally said first control unit (21), is configured to perform said balancing procedure after of said safety procedure (100). In an aspect 82c according to any one of the preceding aspects 82nd, 82a and 82b, said control unit (20), and optionally said first control unit (21), is configured to perform said balancing procedure after the auxiliary safety procedure (104). In an aspect 82d according to any one of the preceding aspects 82nd, 82a, 82b and 82c, said control unit (20), and optionally said first control unit (21), is configured to perform said balancing procedure only if the safety cover is in the proximal position. In an aspect 82e according to any one of the preceding aspects from 82nd to the aspect 82d, said balancing procedure comprises said safety procedure (100).

In an aspect 82f according to any one of the preceding aspects from 82nd to the aspect 82e, said balancing procedure comprises said auxiliary safety procedure (104).

In an 83rd aspect according to any one of the preceding aspects, said apparatus comprises:

an electric supply line (7) connecting said electric motor (6) and said first control unit (21), said electric supply line (7) being configured to electrically power the electric motor (6) of wheel hub (2) to determine the rotation of said wheel,

a power switch (8), optionally a relay, active on said power supply line (7).

In an 84th aspect according to the preceding aspect, said second control unit (22) is operatively connected to said power switch (8) and configured to:

control said power switch (8) between an open condition, suitable for interdicting a power supply to the electric motor (6), and a closed condition suitable for allowing a power supply to the electric motor (6),

verify the existence of the security condition,

if said safety condition is met, control said power switch (8) in the closed condition.

In an 85th aspect according to the preceding aspect:

if said safety condition is not met, define a danger condition comprising at least one of:

commanding said power switch in the open condition,
activating an alarm signal.

In an 86th aspect according to any one of the preceding aspects from 64th to 85th, the first control unit (21) and the second control unit (22) are both operatively connected to the rotation sensor (30), and wherein both the first control unit (21) and the second control unit (22) are configured to:

receive the rotation signal from the rotation sensor (30) as input,
calculate a rotation speed of the wheel hub (2).

In an 87th aspect according to any one of the preceding aspects from 64th to 86th, the second control unit (22) is operationally connected to the closure detector (18) of the safety cover (3), and wherein the second control unit (22) is configured to:

receive the signal of the closure detector (18) as input,
determine a position of the safety cover (3) (optionally of the active portion 4) between the proximal and distal positions.

In an 88th aspect according to any one of the preceding aspects from 64th to 87th, the first control unit (21) and the second control unit (22) are both operatively connected to the closure detector (18) of the safety cover (3), and wherein both the first control unit (21) and the second control unit (22) are configured to:

receive the signal of the closure detector (18) as input,
determine whether the safety cover (3) (optionally of the active portion 4) is in the proximal or distal position. In an 89th aspect according to any one of the preceding aspects from 64th to 88th, the first control unit (21) and the second control unit (22) are operationally independent of each other. In a 90th aspect according to any one of the preceding aspects from the 64th to the 89th, the first control unit (21) and the second control unit (22) are physically distinct, optionally positionally separate from each other. In an 91st aspect according to any one of the preceding aspects from 64th to 90th, the first control unit (21) does not receive input signals from the second control unit (22). In a 92nd aspect according to any one of the preceding aspects from 64th to 91st, the second control unit (22) does not receive input signals from the first control unit (21).

In a 93rd aspect according to any one of the preceding aspects, said control unit (20) comprises a clock generator configured to emit a clock signal having a frequency between 1kHz and 10kHz, optionally between 2 kHz and 5kHz, optionally equal to 3kHz. In a 94th aspect according to the preceding aspect, said control unit (20) is configured to determine the angular speed of the wheel hub (2) as a function of the rotation sensor signal, and said clock signal. In a 95th aspect according to any one of the preceding aspects from 64th to 94th, said second control unit (22) comprises a clock generator configured to emit a clock signal having a frequency between 1kHz and 10kHz, optionally between 2 kHz and 5kHz, optionally equal to 3kHz. In a 96th aspect according to the preceding aspect, said second control unit (22) is configured to determine the angular speed of the wheel hub (2) as a function of the rotation sensor signal, and said clock signal. In a 97th aspect according to any one of the preceding aspects from 64th to 96th, said second control unit (22) is non-programmable.

In a 98th aspect according to any one of the preceding aspects, said rotation sensor (30) comprises an encoder, optionally an optical encoder, having an angular resolution between 0.5° and 10°. In a 99th aspect according to any one of the preceding aspects, said rotation sensor (30) comprises an encoder, optionally an optical encoder, having an angular resolution between 0.8° and 3°. In a 100th aspect according to any one of the preceding aspects, said rotation sensor (30) comprises an encoder, optionally an optical encoder, having an angular resolution between 1° and 2°. In a 101st aspect according to any one of the preceding aspects, said rotation sensor (30) comprises an encoder, optionally an optical encoder, having an angular resolution between 1.3° and 1.5°. In an 102nd aspect according to any one of the preceding aspects, the safety cover (3) is movable between the distal position and the proximal position by rotation about a respective actuation axis (Y).

In a 103rd aspect according to any one of the preceding aspects, the safety cover (3) (optionally of the active portion 4), when arranged in the proximal position, is configured to at least partially wrap around said wheel. In a 104th aspect according to any one of the preceding aspects, the safety cover (3) (optionally of the active portion 4) has a curved shape, optionally substantially semicircular. In a 105th aspect according to any one of the preceding aspects, the curved, and optionally semicircular, shape of the safety cover (3) (optionally of the active portion 4) covers an angular extent between 80° and 200°, optionally between 120° and 180°. In a 106th aspect according to any one of the preceding aspects, the safety cover (3) (optionally of the active portion 4) lies on an arc of circumference. In a 107th aspect according to any one of the preceding aspects, the safety cover (3) (optionally of the active portion 4) is configured to protect an operator during wheel balancing operations. In a 108th aspect according to any one of the preceding aspects, the safety cover (3) (optionally of the active portion 4) is made of a plastic or composite or metallic material.

In a 109th aspect according to any one of the preceding aspects, the safety cover (3) (optionally of the active portion 4) is made in one piece. In a 110th aspect according to any one of the preceding aspects 1 to 108, the safety cover (3) (optionally of the active portion 4) comprises a first fixed portion and a second portion, distinct and separate from the first potion, movable between said proximal position and said distal position.

In an 111th aspect according to any one of the preceding aspects, when the locking system (10) is in the lock position, the safety cover (3) (optionally of the active portion 4) is movable from the distal position to the proximal position. In an 112th aspect according to any one of the preceding aspects, the active portion of the safety cover (3) has a distance from said wheel hub (2) that varies during movement of the safety cover (3) (optionally of the active portion 4) between the distal position and the proximal position.

In a 113th aspect according to any one of the preceding aspects:

when the safety cover (3) (optionally of the active portion 4) is in the distal position, said active portion of the safety cover (3) has a first distance from said wheel hub (2),
when the safety cover (3) is in the proximal position, said active portion of the safety cover (3) has a second distance, lower than said first distance, from said wheel hub (2).

In a 114th aspect according to any one of the preceding aspects, said apparatus comprises at least one actuator (11) operatively connected to said control unit (20), optionally to said second control unit (22), and configured to move the locking system (10) between the lock position and the unlock position.

In an 115th aspect a balancing method (1) for wheels is provided, the balancing method comprising:

provide a balancing apparatus (1) according to any one of the preceding aspects,
perform a wheel balancing procedure comprising:

put said wheel in rotation about said rotation axis (R) of wheel hub (2),
move said locking system (10) from the unlock position to the lock position.

In an 116th aspect a wheel balancing method (1) performed by a balancing apparatus (1) according to any one of the preceding aspects from 1st to 114th is provided.

In an aspect 117th a wheel balancing method is provided, said balancing method comprising the following steps:

provide a balancing apparatus (1) comprising:

a wheel hub (2) movable by rotation about a rotation axis,
a safety cover (3) movable towards and away from said wheel hub (2) between a distal and a proximal position,

arrange the safety cover in the distal position,
engage a wheel (R) to the wheel hub (2),
move the safety cover (3) from the distal position to the proximal position,
perform a safety procedure of locking the safety cover (3) in the proximal position.

In a 118th aspect according to the preceding aspect, the step of locking the safety cover is performed by a movable locking system at least between:

a lock position, where the locking system (10) is configured to prevent the safety cover (3) from moving from the proximal position to the distal position, and
an unlock position, where the locking system (10) is configured to allow the safety cover (3) to move from the proximal position to the distal position.

In a 119th aspect according to the preceding aspect, the locking system is in accordance with any one of the preceding aspects. In a 120th aspect according to any one of the 117th to 119th aspects the step of locking the safety cover of the safety procedure is automatically performed in at least one operating condition of the balancing apparatus. In a 121st aspect according to the preceding aspect the balancing apparatus operating condition provide for rotation of the wheel hub (2) about its rotation axis (R). In a 122nd aspect according to any one of the preceding two aspects during the operating condition of the balancing apparatus the wheel hub (2) rotates about its own axis (R). In a 123rd aspect according to any one of the three preceding aspects, the safety procedure provides for the optionally automatic movement of the locking system (10) from the unlock position to the lock position during rotation of the wheel hub (2) (optionally of the wheel engaged to said wheel hub) about its own axis.

In a 124th aspect according to any one of the preceding aspects from 117th to 123rd aspects, the safety procedure comprises the steps of:

calculating (102) at least one value of a wheel hub rotation parameter (2),
comparing the calculated rotation parameter value with at least one threshold value,

if the value of the wheel hub rotation parameter (2) is greater than the threshold value, locking the safety cover, optionally by moving (103) the locking system (10) from the unlock position to the lock position.

In a 125th aspect according to the preceding aspect the rotation parameter comprises at least one of: a rotational speed of the wheel hub (2), an angular momentum of the wheel mounted on the wheel hub (2).

In a 126th aspect according to the 124th or 125th aspect, the safety procedure (100) comprises moving the locking system (10) from the lock position to the unlock position if said wheel hub rotation parameter (2) is less than said predefined threshold.

In a 127th aspect according to any one of the preceding aspects from 124th to 126th aspects, the method also comprises the execution of an auxiliary safety procedure (104) (optionally performed by a control unit), performed following the safety procedure (100), wherein the auxiliary safety procedure comprises at least the following steps:

> determine (105) the existence of a security condition,
> if the safety condition is met, allow (106) the rotation of wheel hub (2) such that the rotation parameter of said hub exceeds the threshold value,
> if the safety condition is not met, perform at least one of the following steps:
>
>> preventing (107) the wheel hub (2) from rotating such that said rotation parameter of said hub exceeds the threshold value,
>> issuing an alarm signal.

In a 128th aspect according to the aspect preceding the allow step (106) the rotation of the wheel hub (2) of the auxiliary safety procedure (104) involves the rotation of the wheel hub such that the rotation parameter of said hub exceeds an auxiliary threshold value greater than the threshold value of the safety procedure (100).

In a 129th aspect according to the 127th or 128th aspect, the safety condition is verified at least when one of the following conditions, optionally all of them, are met: the safety cover (3) is arranged in the proximal position, the locking system (10) is in the lock position, and the wheel hub is rotating about its rotation axis.

In a 130th aspect according to any one of the preceding aspects from 124th to 129th, said rotation parameter comprises a rotational speed of the wheel hub (2), wherein said threshold value is between 10 and 14 RPM, optionally substantially equal to 11 RPM. In a 131st aspect according to any one of the preceding aspects from 124th to 130th, said rotation parameter comprises angular momentum of the wheel mounted on the wheel hub (2), wherein said threshold value is between 30 kg*m$^2$ Is and 45 kg*m$^2$ /s, optionally is between 35 kg*m$^2$ Is and 40 kg*m$^2$ Is, even more optionally is substantially equal to 37 kg*m$^2$ /s.

In a 132nd aspect according to any one of the preceding aspects from 124th to 131st, said rotation parameter comprises a wheel hub-mounted rotational speed (2), wherein the auxiliary threshold value is between 12 and 14 RPM, optionally it is substantially equal to 13 RPM. In a 133rd aspect according to any one of the preceding aspects from 124th to 132nd, said rotation parameter comprises the angular momentum of the wheel mounted on the wheel hub (2), wherein the auxiliary threshold value is between 35 kg*m$^2$ /s and 53 kg*m$^2$ /s, optionally between 41 kg*m$^2$ Is and 47 kg*m$^2$ /s, optionally is substantially equal to 44 kg*m$^2$ /s.

In a 134th aspect according to any one of the preceding aspects from 117th to 133rd, the method, following the safety procedure (optionally following the auxiliary safety procedure), involves the following steps:

> rotate the wheel according to a predefined angular speed,
> determine the presence of any imbalance of the wheel mounted on the wheel hub (2).

In a 135th aspect according to the preceding aspect, the step of determining the presence of imbalances is performed following the safety procedure and the auxiliary safety procedure.

In a 136th aspect according to any one of the preceding aspects from 117th to 135 the balancing apparatus (1) is of the type in accordance with any one of the aspects from 1st to 114th. In a 137th aspect according to any one of the preceding aspects from 117th to 136th the safety procedure of the balancing method is implemented by a control unit (20), optionally of the balancing apparatus.

BRIEF DESCRIPTION OF THE DRAWINGS

Some embodiments and aspects of the invention will be described below with reference to the attached drawings, provided for illustrative purposes only and therefore not limiting wherein:

- Figure 1 is a perspective view of balancing apparatus according to the present invention wherein the safety cover is in the distal position;
- Figure 2 is a perspective view of balancing apparatus according to the present invention wherein the safety cover is in the proximal position;
- Figure 3 is a perspective view of the back of the balancing apparatus according to the present invention wherein the safety cover is in the distal position;
- Figure 4 is a perspective view of the safety cover locking system according to the present invention, wherein the locking system is in the unlock position and the safety cover is in the distal position;
- Figures 5 and 6 are side views of the safety cover locking system according to the present invention, wherein the locking system is in the unlock position and the safety cover is in the distal position;
- Figures 7 and 8 are views of the safety cover locking system according to the present invention, wherein the locking system is in the unlock position and the safety cover is in the proximal position;
- Figures 9 and 10 are views of the safety cover locking system according to the present invention, wherein the locking system is in the lock position and the safety cover is in the proximal position;

- Figure 11 is a detail view of the locking system in the lock position and wherein the safety cover is in the proximal position;
- Figure 12 is a detail view of the wheel hub rotation sensor of the balancing apparatus according to an embodiment form in accordance with the present invention;
- Figure 13 shows a connection diagram comprising the control unit according to an embodiment form in accordance with the present invention;
- Figure 14 shows a signal (A) emitted by the rotation sensor, and a signal (B) emitted by the clock generator;
- Figure 15 shows a representative flow chart of the safety procedure executable by the balancing apparatus in accordance with the present invention;
- Figures 16 and 17 each show a flow chart representative of the safety procedure and auxiliary procedures executable by the balancing apparatus in accordance with the present invention.

<u>DEFINITIONS AND CONVENTIONS</u>

Note that in this detailed description corresponding parts illustrated in the figures are shown with the same numerical references. The figures may illustrate the subject matter of the invention by means of representations that are not to scale; therefore, parts and components illustrated in the figures related to the subject matter of the invention may relate only to schematic representations.

In the present discussion, the terms *"balancing apparatus"* or *"balancer"* are equally used to identify the subject matter of the present invention, as illustrated by numerical reference 1 in the attached figures.

Wheel

The term "*wheel*" refers to the component that, by rolling, enables the movement of a vehicle. The wheel may comprise, non-limitingly, a rim and a tire, wherein the tire is mounted externally on said rim. Thus, the wheel may define the rim and tire assembly of a vehicle.

Alternatively, the term wheel may refer exclusively to the rim, thus not necessarily including the tire. Balancing operations may then be directed exclusively to the rim, without a tire, for example wherein it is necessary to check the rim following an accident. The rim may be made of metal material, such as steel or aluminum alloy. Alternatively, the rim may be made of composite material, such as carbon fiber and epoxy resin.

The rim may be made in one piece, a solution commonly used in the automotive industry, or it may consist of two or more elements that, constrained together, define the rim. In the motorcycle or bicycle sector, rims may comprise a plurality of spokes extending between an inner hub and an outer circumferential profile.

The tire, on the other hand, is made using elastomeric materials, which allow it to absorb vibrations derived from the road surface and maximize the vehicle's road holding.

The present invention is directed to a balancing apparatus suitable for a plurality of wheel types, whether for passenger cars, trucks or motorcycles or bicycles.

**Control unit**

The wheel balancing apparatus described and claimed here may comprise at least one control unit 20 responsible for controlling operating conditions put in place by the same apparatus and/or controlling method steps.

Control unit 20 may be a single unit or consist of a plurality of distinct control units depending on design choices and operational needs.

The term control unit means an electronic type component, which may comprises at least one of: a digital processor (CPU), an analog type circuit, or a combination of one or more digital processors with one or more analog type circuits. The control unit may be "*configured*" or *"programmed"* to perform certain steps: this may be accomplished in practice by any means that allows the control unit to be configured or programmed. For example, in the case of a control unit comprises one or more CPUs and one or more memories, one or more programs may be stored in appropriate memory banks attached to the CPU(s); the program(s) contain instructions that, when executed by the CPU(s), program or configure the control unit to perform the operations described in relation to the control unit. Alternatively, if the control unit is or comprises analog type circuitry, then the control unit circuitry may be designed to include circuitry configured, in use, to process electrical signals in such a way as to perform the steps related to the control unit.

This description refers to both digital and analog control units.

An analog control unit is defined as a control unit configured to manage processes or functions using analog signals or continuous physical quantities. An analog control unit may be configured to receive analog inputs in the form of voltage, current or other continuously varying signals, and to adjust the output based on those analog inputs.

A digital control unit, on the other hand, allows the processing of digital signals, that is, discrete values. A digital control unit is thus apt to receive as input binary data or discrete conditions, such as 0 and 1, and output a discrete or continuous signal. Digital control units commonly comprise microprocessors or digital circuits, which are apt to receive input, perform calculations or operations, and generate output in a discrete manner.

## Locking system

In the description, the terms *"locking (10)"* or *"locking system (10)"* or "lock" are used to identify the same component of the balancing apparatus (or balancer) configured to act on a safety cover. In particular, the locking (10) (locking system or lock) is movable between:

a lock position, where the locking (10) is configured to prevent the safety cover (3) from moving from a proximal position from a position distal to the wheel hub, and
an unlock position, where the locking (10) is configured to allow the safety cover (3) to move from the proximal position to the distal position.

## Actuator

The term *"actuator"* means any device capable of causing a movement on a body, thus including a motor, for example upon command from the control unit (reception by the actuator of a command sent by the control unit). The actuator may be of the electric, pneumatic, mechanical (e.g., spring), hydraulic, or other types.

An electrically powered actuator may comprise an electrically powered solenoid: the solenoid, when electrically powered, generates an electromagnetic force capable of determining the movement of, for example, a rod connected in this particular case to a locking system. Such a rod is then pre-positioned to move the locking system between the lock position and the unlock position.

An electric type actuator may alternatively comprises an electric motor pre-positioned to move the locking system between the lock position and the unlock position. Such an electric motor may comprise a movable motor shaft for rotation about its own axis and operationally connected to the locking system.

A pneumatic-type actuator may comprise a piston movable by a pressurized fluid, such as air, water or oil. The supply of the pressurized fluid to the hydraulic actuator consequently determines the movement of the piston responsible, in this particular case, for moving the locking system between the lock position and the unlock position.

## Parameters

Various parameters and signals output by sensors and detectors of the balancing apparatus and received by the control unit are illustrated in the description, claims and summary section. These parameters and signals comprise the wheel hub rotation parameter and the respective rotation signal, the locking system position signal, the safety cover closure detector signal, the locking signal representative of the position assumed by the locking system, and the balancing signal.

Note that when we describe a parameter being greater or less than a threshold, we mean that the value assumed by the parameter in question, during an operating condition of the apparatus, is greater or less than that threshold, respectively.

## DETAILED DESCRIPTION

## Wheel balancing apparatus

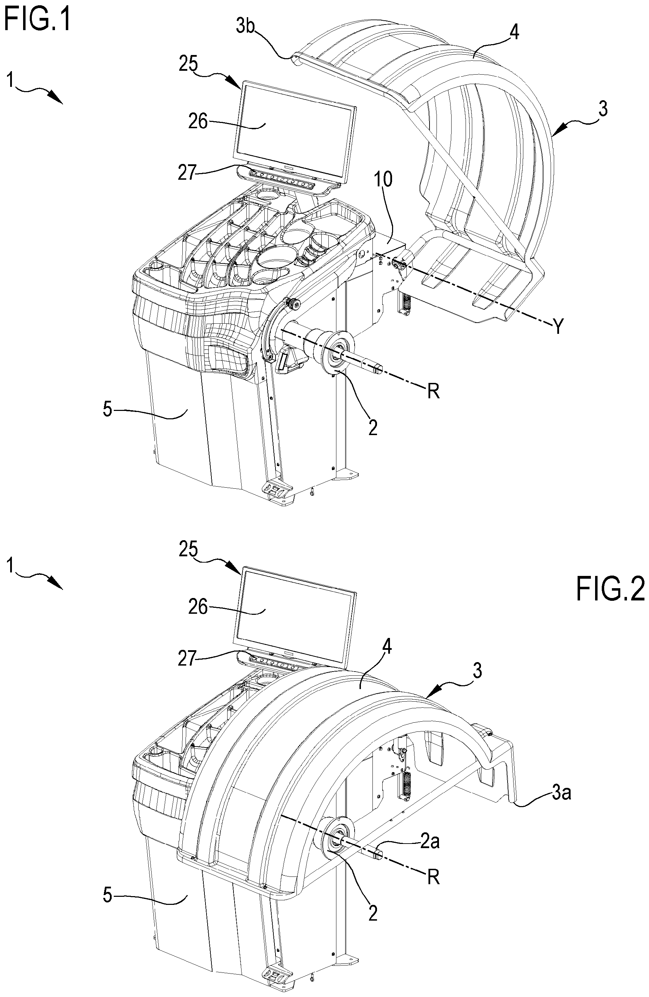

A balancing apparatus or balancer (Figures 1-3) configured to perform wheel balancing procedures is indicated by the reference number 1.

The balancing apparatus 1 may comprise a wheel hub 2 movable for rotation about its own rotation axis R, as shown in Figures 1-3. The wheel hub 2 is configured to removably engage a wheel that is the subject of the balancing operations and to rotate the wheel about the rotation axis R. The wheel hub 2 may comprise a retainer configured to removably lock the wheel to the wheel hub such that the wheel and wheel hub 2 are integral with each other. The retainer may comprise a screw or nut or locking ring or other component that may be fixed to the wheel hub. Alternatively, the retainer may comprise a pneumatic clamp: in such case, the wheel may then be constrained to wheel hub 2 by the action of a pressurized fluid, which moves that retainer to lock the wheel in place.

A rotation of the wheel hub 2 about its rotation axis R results, consequently, in a simultaneous rotation of the wheel about the same rotation axis R. During an operating condition of the apparatus, that is, during a wheel balancing procedure, the wheel is mounted on the wheel hub and placed in rotation about the wheel hub's rotation axis R. In that operating condition, the wheel, and thus also the wheel hub, have essentially a single degree of rotational freedom about the rotation axis R: in other words, the wheel, in said operating condition, is stably constrained to the wheel hub, both axially and torsionally. During the operating condition, the wheel is then fixed to the wheel hub, such that the wheel has no degrees of freedom with respect to the wheel hub.

The rotation axis R of the wheel hub may extend along a direction substantially parallel to the ground during an apparatus operating condition. In other words, the rotation axis R of the wheel hub is, in use, essentially horizontal. The apparatus 1 comprises a rotating shaft 2a projecting from the wheel hub 2 and movable for rotation about the rotation axis R. The rotating shaft 2a may be made of metal material, e.g., steel, iron, and aluminum, or of composite material, and have, in section according to a plane orthogonal to the rotation axis R, a substantially circular shape. The shaft 2a emerges from wheel hub 2 and is configured to pass through the hub of a wheel (optionally of the rim) engaged on wheel hub 2. In detail, the shaft 2a is configured to receive in engagement the retainer and thus allow the wheel to rest stably and lock against the wheel hub 2. The shaft 2a and the wheel hub 2 are integral to each other such that there is no relative movement between said components.

The apparatus 1 may further comprise an electric motor 6 operatively connected to the wheel hub 2 and configured to rotate the wheel hub 2, optionally the wheel hub and the shaft 2a. The electric motor 6 may be a DC or AC motor. The electric motor 6 may be directly connected to the wheel hub, or a transmission system may be interposed between the wheel hub 2 and the electric motor 6. In case a transmission system is present, the latter may comprise a drive belt, a transmission chain or gears.

The apparatus 1 may also comprise at least one wheel imbalance sensor configured to emit a signal representative of wheel imbalance. The apparatus 1 has at least one control unit 20 configured to perform balancing apparatus operations: note that, as described in more detail in the dedicated section, the control unit 20 may comprise a first control unit 21 and a second control unit 22.

The control unit 20, and optionally the first control unit 21, may be configured to calculate an imbalance of the wheel during one of its rotations based on the signal emitted by the imbalance sensor, and indicate a position on the wheel at which to place one or more balancing weights. The balancing weights, placed by the operator according to the indications provided by the balancing apparatus 1, make it possible to reduce or cancel the wheel imbalance.

The control unit 20 may also be operatively connected to the electric motor 6 of the wheel hub 2 and configured to control a rotational speed of the motor 6, and consequently control a rotational speed of the wheel hub 2. The control unit 20 is then configured to turn the electric motor 6 on and off, and adjust its rotational speed during an operating condition of the apparatus 1, such as during a balancing procedure.

The control unit 20 may then be configured to receive one or more setting parameters as input, and control the rotation speed of the electric motor 6 of the wheel hub 2 to detect the wheel imbalance signal.

The apparatus 1 may optionally comprise an emitter configured to emit a light beam at a specific wheel position at which to arrange the balancing weights. The apparatus may further comprise a graphical user interface 25, for example comprising a screen 26 and a data entry system 27, optionally a touchscreen or a screen equipped with a keyboard and/or pointer; the graphical user interface is, for example, configured to enter one or more parameters and to display status information to the operator. Status information may comprise information related to balancing operations, such as a display of the wheel balancing degree, and information related to apparatus safety condition, such as an alarm condition.

The control unit 20, and in particular the first control unit 21, is connected to the graphical interface 25 to receive parameters as input, and to show information about balancing operations on a screen.

The balancing apparatus 1 may then comprise a structure 5 including lateral walls defining an internal volume housing at least the electric motor 6. The structure 5 defines a support for the motor 6, the wheel hub 2, and the safety cover 3 described below.

The apparatus 1 comprises a safety cover 3, shown in Figures 1-3, for the wheel, suitable for defining, at least in one of its positions, a protection for the operator during the wheel balancing steps. The safety cover 3 comprises at least one active portion 4 movable towards and away from the wheel hub 2 between a distal position and a proximal position. In detail, the safety cover 3 is movable between the distal and proximal positions such that

during the movement between the distal and the proximal positions, the safety cover 3 (optionally the whole cover 3) moves towards the wheel hub 2, during the movement between the proximal and the distal positions, the safety cover 3 (optionally the entire cover 3) moves away from the wheel hub 2.

In fact, the active portion 4 may define essentially the entire safety cover 3 or only a part of it. In detail, the active portion 4 of the safety cover 3 (optionally the safety cover) has a first distance to the wheel hub 2 when the safety cover is arranged in the distal position, and a second distance to the wheel hub 2 when the safety cover is arranged in the proximal position: the first distance is greater than the second distance.

The distal position of the safety cover 3 is apt to allow or facilitate wheel mounting and dismounting operations on wheel hub 2. In contrast, the safety cover 3, when placed in the proximal position, is apt to protect the operator from the rotating wheel. In other words, the operator may initially place the safety cover 3 in the distal position, mount the wheel on the wheel hub 2, reposition the safety cover 3 in the proximal position, and start the wheel balancing operations that involve rotating the wheel about the rotation axis R.

The safety cover 3, optionally the active portion 4, may have a curved shape, optionally a substantially semicircular shape, extending around the wheel, at least partially wrapping around the wheel when the safety cover 3 is in the proximal position. The curved shape of the safety cover 3 may cover an angular extension between 80° and 200°, optionally between 120° and 180°. This angular extension may be measured around a virtual center located substantially at the wheel hub 2. Note that the safety cover 3, when arranged in the proximal position, may cover at least 50% of the wheel tread.

Note that the safety cover 3 is intended to cover an upper portion of the wheel, such that the wheel is interposed between the ground and the safety cover 3 in the proximal position during an operating condition of the apparatus 1.

In Figures 1-3, a predominant part of the safety cover 3 is movable between the distal and proximal positions, to substantially define the active portion 4. In the attached figures, a safety cover 3 that, in a non-limiting way, is at least 50% (optionally at least 70%) movable between the distal and proximal positions to essentially define the active portion 4 has been illustrated. In fact, active portion means the part of the safety cover that certainly moves towards and away relative to the wheel hub 2, during movement between the distal and proximal positions.

The safety cover 3 may be made of plastic or composite material or metal. In an embodiment, the safety cover 3 is made in one single piece.

In an alternative embodiment not shown in the attached figures, the safety cover 3 may comprise a fixed first portion and a second portion, distinct from the first portion, that is movable between the proximal and distal positions. In such a case, the first portion and the second portion, when the latter is placed in the proximal position, define in combination a protection for the operator. In such configuration, only the second portion is movable between the distal and proximal position relative to the wheel hub. In fact, the second portion substantially defines the active portion while the remaining portion of the safety cover, in such configuration, is fixed. In other words, only a portion of the safety cover is movable relative to wheel hub 2.

In fact, the active portion 4 of the safety cover may comprise any portion of the safety cover 3 suitable for translation and/or rotation during movement between the proximal and distal positions. For example, the active portion may comprise a centerline portion of the safety cover 3.

The safety cover extends between a first end edge 3a and a second end edge 3b along a curved profile: the active portion 4 may be interposed between the first end edge 3a and the second end edge 3b.

The safety cover 3 may be movable between the distal and proximal positions by rotation about a respective actuation axis Y. The actuation axis Y may be parallel to the rotation axis R of the wheel hub 2. The actuation axis Y may intersect the first end edge 3a, with the active portion 4 being interposed between the first end edge 3a and the second end edge 3b, as mentioned above.

In accordance with the embodiment shown in Figures 1-3, active portion 4 may vary its height relative to the ground during a movement of the safety cover 3 between the proximal and distal positions: in particular, wherein safety cover 3 is in the distal position, active portion 4 has a greater height relative to the ground than in a condition wherein the safety cover 3 is in the proximal position.

The apparatus 1 may further comprise a closure detector 18 configured to selectively emit a respective signal representative of whether the safety cover 3 is in the proximal position or the distal position. In other words, the closure detector 18 is capable of determining whether the safety cover 3 is in the proximal position or the distal position. The closure detector 18 is connected to the control unit 20; the latter is configured to receive the signal from the closure detector 18, and determine whether the safety cover 3 is in the proximal position or the distal position. The closure detector 18 may comprise one or more electrical switch(es) capable of opening and closing a respective electrical circuit, operatively communicating with the control unit 20, depending on the position assumed by the safety cover. Alternatively, the detector 18 may comprise an optical or acoustic or electromagnetic or other detector adapted to detect when the safety cover assumes the proximal or distal position respectively by providing a corresponding signal to the control unit 20.

The apparatus 1 may also comprise a locking system 10, also called locking 10 o lock, configured to lock the safety cover 3 at least in the proximal position. When locking system 10 is activated, the safety cover 3 is locked in the proximal position. In other words, locking system 10, when activated, precludes the ability to move the safety cover 3 from the proximal position to the distal position.

In more detail, the locking system 10 is movable between a lock position, wherein the locking system 10 is configured to prevent the safety cover 3 from moving from the proximal position to the distal position, and an unlock position, where the locking system 10 is configured to allow the safety cover 3 to move from the proximal position to the distal position.

In an embodiment, the locking system 10 may be activated and deactivated by a control unit 20. The control unit 20 may then be operationally connected to the locking system 10 and configured to move the locking system 10 between the lock position and unlock position.

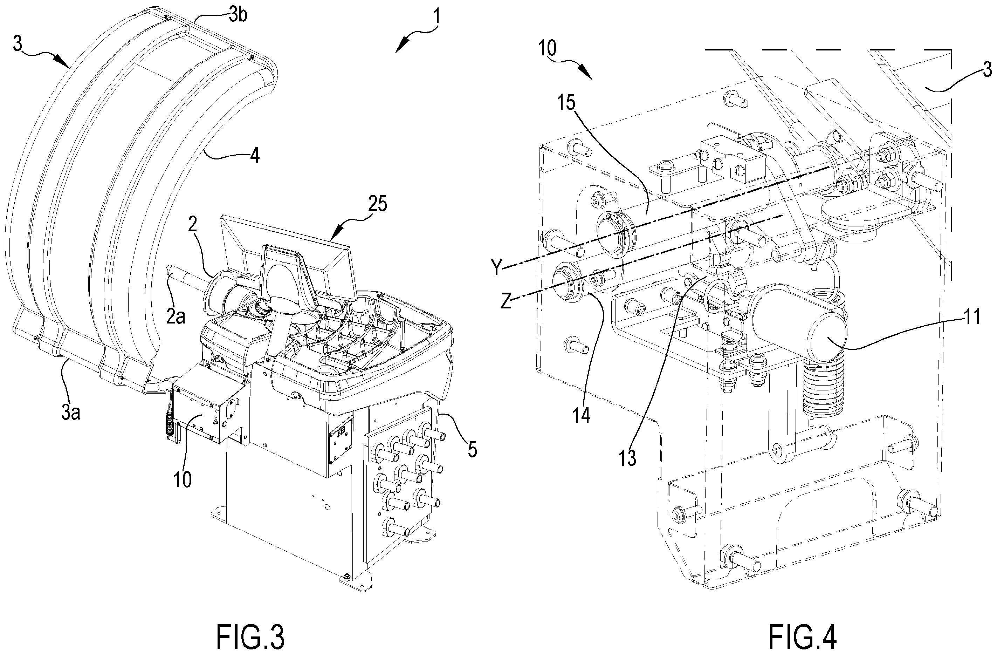

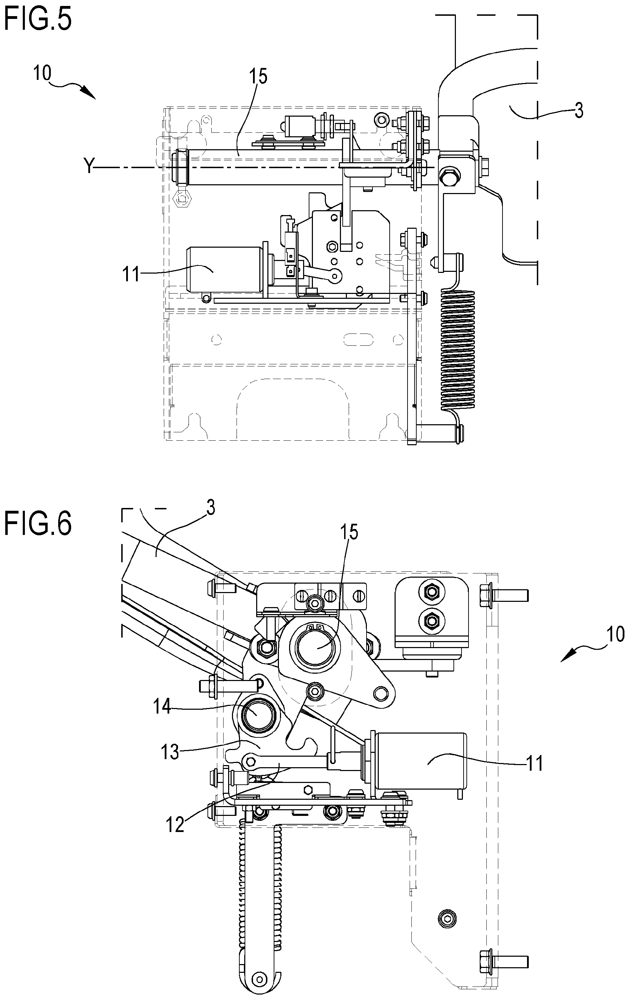

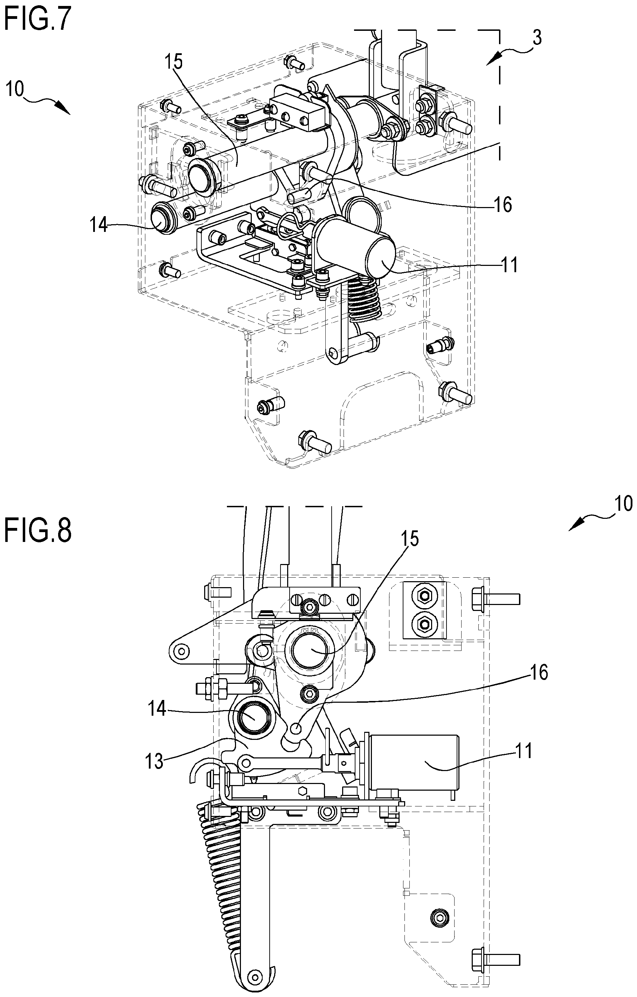

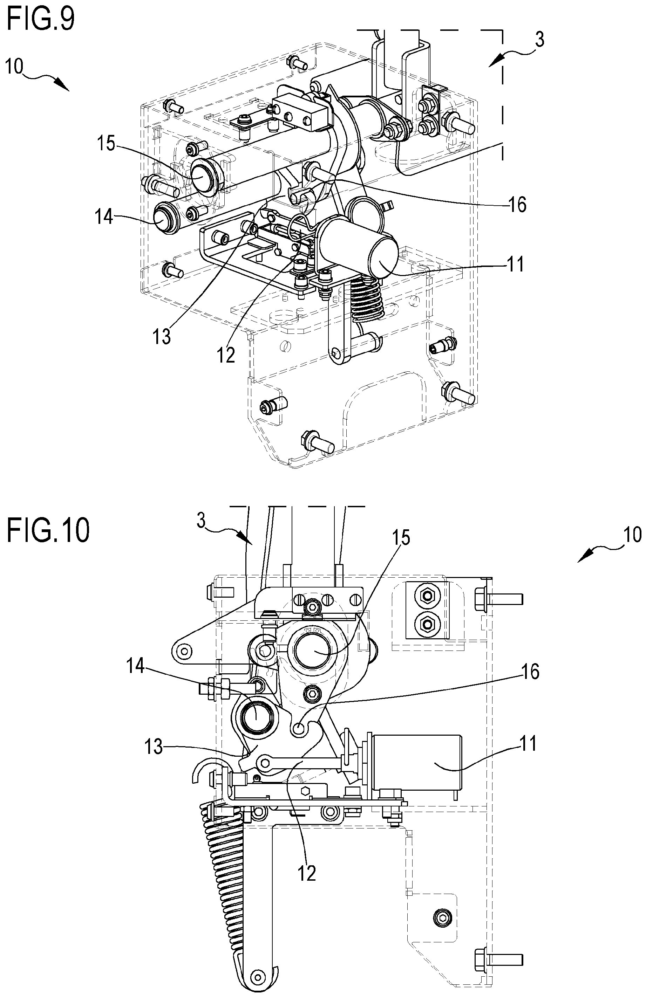

In detail, the apparatus 1 may comprise at least one actuator 11 active on locking system 10 and configured to move the latter between lock position and unlock position. Actuator 11 is shown, according to a non-limiting embodiment, in Figures 4-10. Actuator 11 may comprise an electrically powered solenoid configured to move an actuating rod 12 acting on locking system 10. A movement of the actuating rod 12 results in a movement of the locking system 10 between the lock position and the unlock position. In such a case, actuator 11 may be of the linear type. Alternatively, actuator 11 may be configured to move the actuating rod 12 by rotation or by roto-translation.

The control unit 20 is then configured to command said actuator 11 to move the locking system 10 between the lock position and the unlock position. The step of commanding the actuator 11 may comprises commanding the energization of the actuator, such as by commanding a power supply to the actuator 11 (when the latter is of the electric type), to move the locking system from the unlock position to the lock position. Note that locking system 10 is normally in the unlock position: this means that locking system 10, when actuator 11 is not powered, is in the unlock position. When the control unit 20 commands the actuator 11 to be powered, the actuator 11 determines the movement of the locking system 10 from the unlock position to the lock position.

The following describes some embodiment examples of the locking system 10, which, however, should not be understood in a limiting way, as the locking system 10 may comprise a mechanical organ (such as a hook, pin, gripping element, or other) capable of interfering with the motion of the safety cover 3 upon command of an actuator 11 (electrical, pneumatic, hydraulic, mechanical, or other) or upon action of a passive system (such as an inertial system). As will be seen, the locking system 10 may also comprises an active actuator or motor directly on safety cover 3.

In the embodiment shown in Figures 4-10, the locking system 10 comprises a movable hook 13, e.g., movable by rotation about a respective locking axis Z, and configured to define the lock position of the locking system 10. The locking system 10 may comprise a locking shaft 14 carrying the movable hook 13; the locking shaft 14 is movable by rotation about said locking axis Z. A rotation of the blocking shaft 14 about the locking axis Z results in a concomitant rotation of the hook 13. Hook 13 is then movable between a first position, defining the unlock position of locking system 10, and a second position defining the lock position of locking system 10.

The locking system 10 may further comprise an actuation shaft 15 connected to the safety cover 3, wherein the actuation shaft 15 is movable by rotation about a respective actuation axis Y. A rotation of the safety cover 3 about actuation axis Y results in a simultaneous rotation of the actuation shaft 15. The actuation axis Y of the actuation shaft 15 may be substantially parallel to the locking axis Z of the lock shaft 14.

The actuation shaft 15 may carry a stop 16, offset in position relative to actuation axis Z, integral with the actuation shaft 15, such that a rotation of the actuation shaft 15 about its own actuation axis Y results in a concomitant translation and/or rotation of the stop 16. The stop 16 may comprise a pin, such as a pin having a substantially cylindrical shape.

The hook 13 and the stop 16 are then configured to engage with each other at least when the locking system 10 is in the lock position. In particular, the engagement of the stop 16 and the hook 13 determines the lock position of the locking system 10.

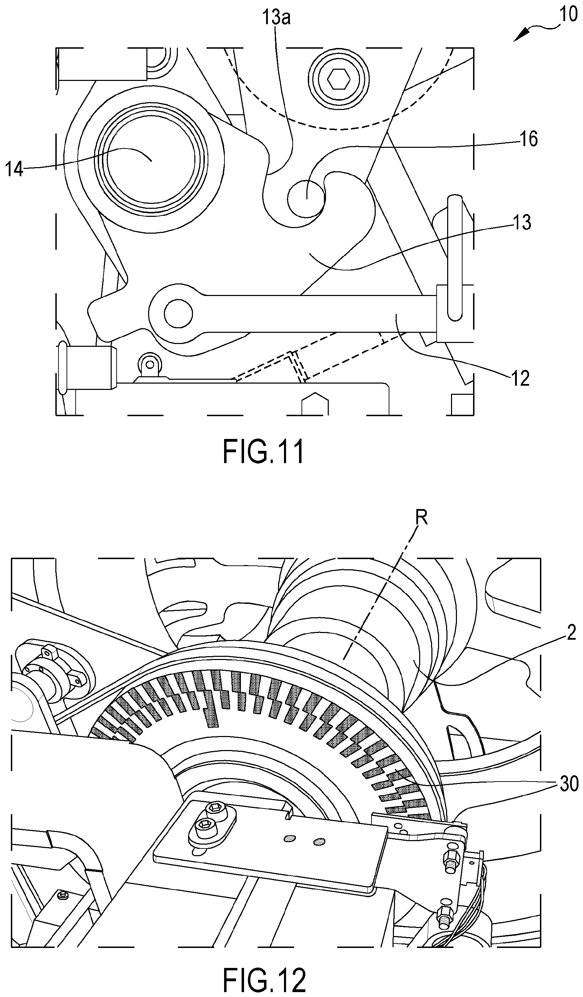

When the locking system 10 is in the lock position, the stop 16 is inserted within a recess 13a of hook 13. The recess 13a has a shape configured to receive the stop 16, and concurrently to prevent the stop 16 from escaping from the recess 13a. In more detail, the shape of recess 13a may essentially define an undercut, when the hook 13 is coupled to the stop 16 as shown in Figure 11, preventing the hook 13 from rotating from the lock position to the unlock position, should an operator attempt to move the safety cover 3 from the proximal position to the distal position.

In an alternative embodiment not shown in the attached figures, the apparatus 1 may comprise a passive system configured to move the locking system 10 between the lock position and the unlock position: in such a case, therefore, the locking system 10 is not controlled, between the lock position and the unlock position, by a control unit. In contrast, in such an embodiment, the passive system may comprise a passive mechanism is configured to move the locking system 10 between the lock position and the unlock position, based on a rotational speed of the wheel hub 2, is. For example, such a passive mechanism may comprise an inertia system, such that a rotation of the wheel hub results in a centrifugal acceleration on an actuation mass, and consequently a movement of said actuation mass, such as a radial movement. The movement of said actuation mass consequently results in the activation of the locking system 10, that is, its movement from the unlock position to the lock position.

In a further embodiment not shown in the attached figures, the locking system 10 may comprise an actuator (e.g., an electric, pneumatic, or hydraulic actuator) that is directly mechanically connected to the safety cover 3, or otherwise kinematically connected to the safety cover 3. Such an actuator may be connected to the control unit 20 and configured, when in the lock position, to lock the safety cover in its proximal position. Additionally, such an actuator may be configured to automatically move the safety cover between its proximal and distal positions. The balancing apparatus 1 may further comprise a lock sensor 17, operatively connected to the control unit 20, configured to detect whether the locking system 10 is in the lock position or the unlock position. In other words, the lock sensor 17 is configured to emit a signal representative of a position of the locking system 10 between the lock position and the unlock position. The lock sensor 17 may comprise a switch operable by the movement of the locking system 10 between the lock position and the unlock position. Such a switch may be located on the actuator 11, such that a movement of the actuator results in an activation of the lock sensor 17. Alternatively, such a switch may be operable from the movable hook 13.

As an example, when the locking system 10 is in the lock position, the lock sensor switch 17 may be in a closed condition, that is, a condition that allows electric current to flow through the switch. Conversely, when the locking system 10 is in the unlock position, the lock sensor switch 17 may be in an open condition, that is, a condition that interdicts the passage of electric current through the switch. Control unit 20, connected to said switch, may then be configured to detect the close or open condition of the switch and, based on that condition, determine whether the locking system 10 is in the lock position or the unlock position.

Alternatively, the lock sensor 17 may comprises a first switch and a second switch: the first switch may be prepositioned to detect the lock position of the locking system 10, while the second switch may be prepositioned to detect the unlock position of the locking system 10. In a further embodiment, the lock sensor 17 may comprise one of an optical sensor, a magnetic sensor, a proximity sensor, and an inductive type sensor.

The apparatus may comprise at least one rotation sensor 30, communicatively connected to the control unit 20, configured to emit a rotation signal representative of a rotation of the wheel hub 2 about its rotation axis R. The rotation signal may then be representative of an angular speed of the wheel hub about the rotation axis R. In turn, the control unit may be configured to determine the angular speed of the wheel based on the above rotation signal. The rotation sensor 30 may comprise an encoder, such as an optical or magnetic encoder, as shown in detail in Figure 12. The encoder may have an angular resolution between 0.5° and 10°. Optionally, the encoder may have an angular resolution between 1° and 2°, or between 1.3° and 1.5°.

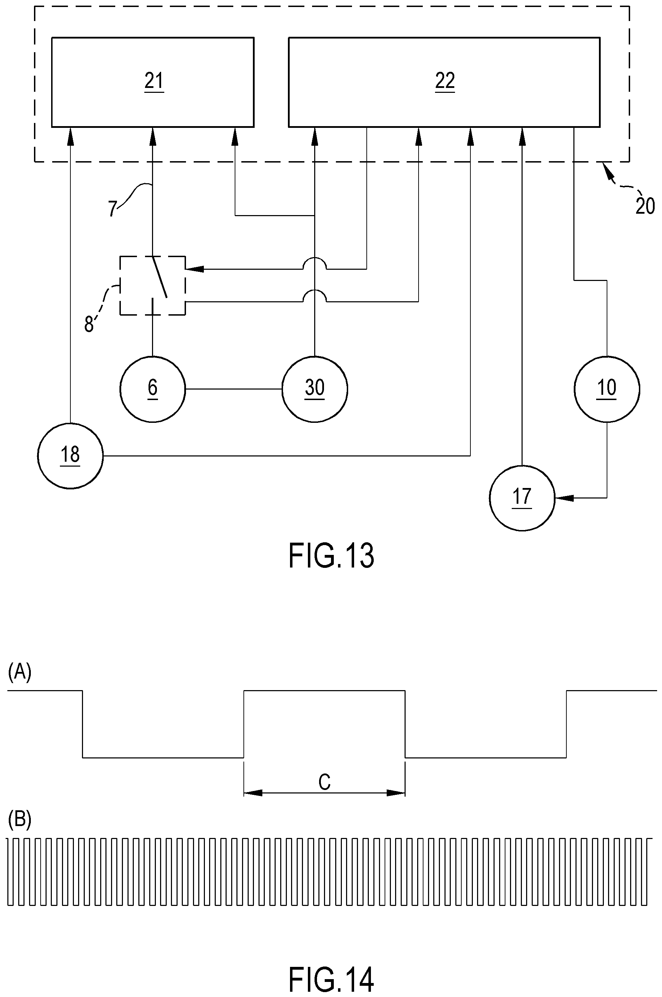

Control unit 20 may also comprise a clock generator configured to emit a clock signal, shown in Figure 14, having a clock frequency between 1kHz and 10kHz, optionally between 2 kHz and 5kHz, optionally equal to 3kHz. In particular, Figure 14 shows the rotation signal (A) emitted by rotation sensor 30, and the clock signal (B) emitted by the clock generator. The clock signal (B) defines a time-varying signal between a maximum value and a minimum value at the clock frequency. Similarly, the rotation signal defines a respective time-varying signal between a respective maximum value and a respective minimum value at a frequency dependent on the rotation speed of wheel hub 2.

Control unit 20 may then be configured to determine the angular speed of wheel hub 2 as a function of the rotation signal from rotation sensor 30, and the clock signal. In other words, control unit 20 may be adapted to count a number of variations, between the minimum value and the maximum value, of the clock signal within a defined temporal window (C) of the rotation signal. The temporal window (C) is interposed between two consecutive maximum values, or minimum values, of the rotation signal (A).

The apparatus 1 may also comprise an electrical supply line 7 connecting the motor 6 and the control unit 20: the electrical supply line 7 is then configured to electrically power the electric motor 6 to determine the rotation of wheel hub 2 and consequently of the wheel engaged on the wheel hub 2.

The apparatus 1 may also comprise a power switch 8, such as a relay, active on the power supply line 7. Power switch 8 may be operationally connected to the control unit 20, optionally to the second control unit 22 as shown in Figure 13. Control unit 20 may then be configured to move said power switch 8 between an open condition, in order to prevent the electric current to reach the motor 6, and a closed condition suitable for allowing the electric current to reach the motor 6.

**Procedures**

This description is also directed to a safety procedure 100 comprising a step of controlling the locking system 10 between the lock position and the unlock position. The safety procedure 100 may be controlled by the control unit 20. Alternatively, the safety procedure 100 may be executed by the passive system previously described, thus not requiring a control unit in charge of executing the safety procedure 100.

The safety procedure 100 comprises at least one step of automatically moving 103 the locking system 10 between the lock position and the unlock position. In particular, the safety procedure 100 comprises moving 103 the locking system 10 from the unlock position to the lock position at least in an operating condition of the apparatus 1. Such an operating condition of the apparatus may involve the wheel hub 2 rotating about its own rotation axis R. In other words, at least when the wheel hub 2 is rotating about its rotation axis R, the safety procedure 100 comprises the step of moving 103 the locking system 10 from the unlock position to the lock position.

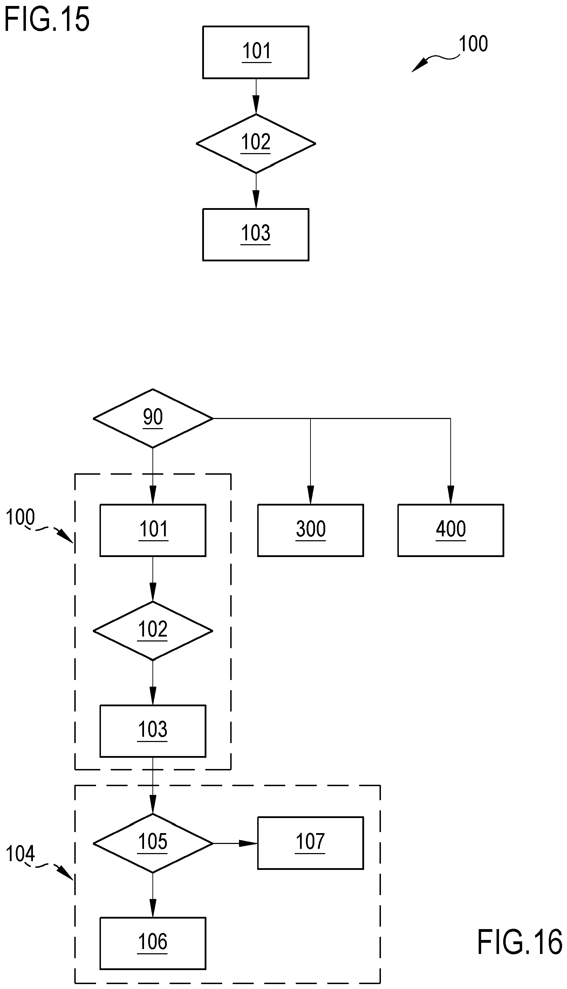

In accordance with an embodiment, the movement of the locking system 10 may be performed by the control unit 20, depending on a wheel hub rotation parameter. In such a case, the safety procedure 100, shown schematically in Figure 15, performed by the control unit 20 may comprise the steps of:

receive 101 the rotation signal as input from the rotation sensor 30, (optionally the sensor emits the signal which is received by the control unit), based on the rotation signal, calculate 102 a rotation parameter of wheel hub 2, (optionally the calculation step is performed by the control unit),

if the rotation parameter of wheel hub 2 is greater than a respective predefined threshold, move 103 the locking system 10 from the unlock position to the lock position (optionally, the control unit following the calculation of the rotation parameter compares this value with the value of a threshold parameter to determine the movement of the locking system 10).

Similarly, if the rotation parameter of wheel hub 2 is less than the predefined threshold, the safety procedure 100 comprises moving locking system 10 from the lock position to the unlock position. The rotation parameter of wheel hub 2 may comprise a wheel hub rotation speed 2, *i.e.,* an angular speed of wheel hub 2. Control unit 20 is then configured to calculate 102 the wheel hub rotation speed based on the rotation signal emitted by rotation sensor 30. Wherein the rotation parameter comprises the rotation speed of wheel hub 2, the predefined threshold is, for example, between 10 and 12 RPM, optionally equal to 11 RPM.

Alternatively, the rotation parameter of the wheel hub 2 may comprise an angular momentum of the wheel mounted on the wheel hub 2. Control unit 20 may be configured to calculate the angular momentum of the wheel based on an angular speed of the wheel, a total wheel mass, and a wheel radius. In more detail, the angular momentum of the wheel may be calculated from control unit 20 by the following equation:

$$L = 0,105 \cdot r \cdot m \cdot R^2$$

where:

L is the angular momentum optionally expressed in $\left[ kg\frac{m^2}{s} \right]$;

r is the rotation speed of the wheel optionally expressed in rotations per minute RPM;

m is the mass of the wheel optionally expressed in kg;

R is the maximum radius of the wheel optionally expressed in meters.

In case the rotation parameter comprises the angular momentum of the wheel mounted on wheel hub 2, the predefined threshold is, for example, between 30 kg*m² Is and 45 kg*m² /s, optionally between 35 kg*m² /s and 40 kg*m² /s, optionally substantially equal to 37 kg*m² /s.

Control unit 20 may also be configured to perform an auxiliary safety procedure104, shown schematically in Figure 16, comprising a step 105 of verifying the existence of a safety condition. If the safety condition is met, control unit 20 is configured to allow 106 the rotation parameter to exceed a predefined auxiliary threshold, wherein the predefined auxiliary threshold is greater than the predefined threshold.

Conversely, if the safety condition is not met, the auxiliary safety procedure may comprise a step of preventing 107 the rotation parameter from exceeding the predefined auxiliary threshold. Alternatively or in combination, the auxiliary safety procedure may comprise a step of emitting an alarm signal if the safety condition is not met. The safety condition may be defined as occurring when at least one, or all, of the following conditions are met: the safety cover 3 is arranged in the proximal position, the electric motor 6 is electrically powered, the locking system 10 is positioned in the lock position, and the locking system 10 is electrically powered. Optionally, the safety condition may be defined as occurring when the electric motor 6 is electrically powered, safety cover 3 is arranged in the proximal position, and locking system 10 is electrically powered.

In case the rotation parameter comprises the rotation speed of wheel hub 2, the predefined auxiliary threshold is between 12 and 14 RPM, optionally 13 RPM. Wherein, on the other hand, the rotation parameter comprises the angular momentum of the wheel mounted on wheel hub 2, the predefined auxiliary threshold is between 35 kg*m² Is and 53 kg*m² /s, optionally between 41 kg*m² /s and 47 kg*m² /s, optionally substantially equal to 44 kg*m² /s. Note that the step of preventing the rotation parameter from exceeding the predefined auxiliary threshold comprises controlling, through control unit 20, electric motor 6 of the balancing apparatus. In other words, control unit 20 is configured to limit the speed of motor 6 so that the wheel does not exceed the predefined auxiliary threshold, for example, that it does not exceed 13 RPM.

The step of allowing the rotation parameter to exceed the predefined auxiliary threshold comprises instead of controlling, through the control unit 20, the electric motor 6 of the balancing apparatus, so that the wheel may exceed the predefined auxiliary threshold, for example, that the wheel exceeds 13 RPM.

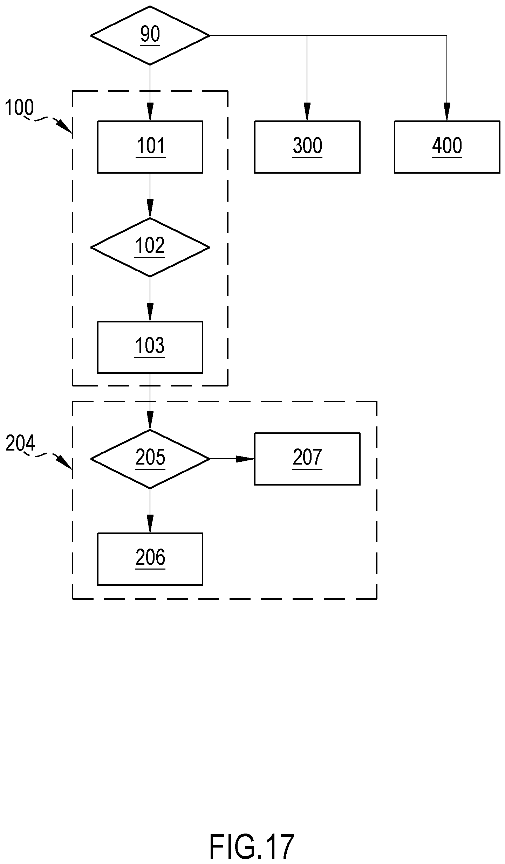

Control unit 20 may be configured to additionally perform an auxiliary safety verification 204. Auxiliary safety verification 204, shown schematically in Figure 17, may be an alternative to the auxiliary safety procedure 104. The auxiliary safety verification 204 comprises at least the following steps:

if the rotation parameter of the wheel hub 2 is greater than the predefined auxiliary threshold, check 205 the existence of the safety condition, wherein the predefined auxiliary threshold is greater than the predefined threshold,
if the safety condition is met, allow 206 a rotation of the wheel hub 2 beyond the predefined auxiliary threshold. Conversely, if the safety condition is not met, the auxiliary safety verification 204 comprises a step of preventing 207 the wheel hub 2 from rotating beyond the predefined auxiliary threshold and/or emitting an alarm signal. The step of allowing 206 and preventing 207 a rotation of the wheel hub 2 beyond the predefined auxiliary threshold comprises controlling the electric motor 6 of the balancing apparatus in speed, through the control unit 20, as previously described.

The alarm signal may be an audible or light signal, optionally emitted by the graphical interface 25.

Control unit 20 may be configured to perform a repositioning 300 procedure when the safety cover 3 is in the distal position. Repositioning procedure 300 is only performed when the safety cover 3 is in the distal position. The repositioning procedure 300 is performed to allow the operator to rotate the wheel mounted on the wheel hub 2 beyond a certain speed while keeping the safety cover open, i.e., in the distal position, as long as such speed is maintained for limited angular rotation.

For example, the repositioning procedure 300, when the safety cover 3 is in the distal position, may allow the wheel to rotate at a speed greater than 11 RPM, as long as that speed is maintained along an angular rotation of wheel hub 2 less than a respective angular threshold. The angular threshold may be between 120° and 360°, optionally between 160° and 200°, optionally substantially equal to 180°.

As an example, having set the predefined threshold at 11 RPM and the angular threshold at 180°, if the rotation speed is maintained above 11 RPM along an angular rotation of wheel hub 2 greater than 180° (i.e., for more than half a turn of the wheel hub), then the 300 repositioning procedure involves issuing an alarm signal and preventing the wheel from rotating itself, for example, by interrupting a power supply to motor 6. The repositioning procedure 300 thus comprises at least the following steps:

detect the rotation parameter of wheel hub 2,
if the rotation parameter is greater than the predefined threshold along an angular rotation of wheel hub 2 greater than a respective angular threshold, prevent the wheel hub 2 from rotating and/or emit the alarm signal. If, on the other hand, the rotation parameter is greater than the predefined threshold along a wheel hub angular rotation 2 less than the angular threshold, the repositioning procedure 300 allows such wheel hub rotation without issuing the alarm signal.

Note that during the repositioning procedure, the control unit 20 may be configured to command a rotation of wheel hub 2 by the electric motor 6 to position the wheel in a specific angular position that allows the operator to install the balancing weights.

Therefore, the repositioning procedure 300 may further comprise to determine whether the motor actively determines the rotation of wheel hub 2: if it is determined that the motor actively determines the rotation of wheel hub 2 and if the rotation parameter is greater than the predefined threshold along an angular rotation of wheel hub 2 greater than the respective angular threshold, the repositioning procedure 300 may command to emit the alarm signal and/or to prevent the wheel hub 2 from rotating. The expression *"the motor actively determines"* means that the rotation of wheel hub 2 is caused by electric motor 6. If the rotation of wheel hub 2 is caused by electric motor 6, it means that motor 6 is electrically powered.

In case, on the other hand, the wheel is rotating but the motor does not actively determine the rotation of the wheel, it means that the wheel is rotated by an external force, such as manually rotated by the operator, or it may mean that the wheel is rotating by inertia.

The control unit 20 may also be configured to perform an initialization procedure 400 suitable for an operator to manually rotate the wheel mounted on the wheel hub 2 when the safety cover 3 is in the distal position. Such a condition may be useful for the operator to verify, for example before performing wheel balancing, that the wheel is properly constrained to the wheel hub.

The initialization procedure 400 comprises at least the following steps:

determine whether the motor actively determines the rotation of the wheel hub 2,
if it is determined that the motor does not determine the wheel hub 2 rotation, allow the wheel hub 2 to rotate beyond the predefined threshold without issuing an alarm signal.

Conversely, if it is determined that the motor determines the rotation of the wheel hub 2, the initialization procedure 400 may comprise to emit an alarm signal and to interrupt a power supply to electric motor 6.

The step of determining whether the motor actively determines the rotation of the wheel hub 2 may comprise checking whether the motor is electrically powered: if it is verified that the motor is not electrically powered, the control unit is configured to determine that the motor does not determine the rotation of the wheel hub 2. Conversely, if it is verified that the motor 6 is electrically powered, the control unit is configured to determine that the motor 6 determines the rotation of the wheel hub 2. Alternatively or in combination, the step of determining whether the motor actively determines said wheel hub 2 rotation may comprise detecting a motor-generated current resulting from wheel hub 2 rotation: if a motor-generated current is detected and if that current is directed in the opposite direction to a motor supply current, the control unit is configured to determine that the motor does not determine said wheel hub 2 rotation.

If the control unit determines that motor 6 does not cause the wheel hub to rotate, it means that the wheel is rotating due to an external force, such as by the hand of the operator.

Note that, as shown in the flowchart in Figures 16 and 17, control unit 20 may be configured to check whether the safety cover 3 is in the proximal position, and allow the locking system to move to the lock position only if control unit 20 has determined that the safety cover 3 is in the proximal position. Similarly, control unit 20 may be configured to initiate the safety procedure 100 only if the safety cover 3 is in the proximal position.

In an embodiment, the control unit 20 is configured to command the electric motor 6 to rotate the wheel hub 2 only if control unit 20 has determined that the safety cover 3 is in the proximal position.

Conversely, if the safety cover 3 is in the distal position, the control unit 20 may be configured to prevent the activation of the safety procedure 100. Optionally, if the safety cover 3 is in the distal position, the control unit 20 may be configured to interdict the locking system from moving to the lock position. In fact, if the safety cover 3 is in the distal position, the control unit 20 may be configured to prevent activation of safety procedure 100. In other words, control unit 20 is configured to interdict the electric motor 6 from rotating the wheel hub 2 if it has been determined that the safety cover 3 is in the distal position.

If the safety cover 3 is in the distal position, the control unit 20 may be configured to perform at least one of initialization procedure 400 and repositioning procedure 300.

First control unit 21 and second control unit 22

In an embodiment, the control unit 20 may comprise a first control unit 21 and a second control unit 22 (Figure 13), each of them being in charge of performing specific operations of apparatus 1. Thus, the operations that can be performed by the first control unit 21 and the operations that may be performed by the second control unit 22 are described below.

The first control unit 21 may be of a digital type, distinct and separate from the second control unit 22. The first control unit 21 may be configured to control a rotational speed of the electric motor 6 operatively connected to the wheel hub 2. Likewise, the first control unit 21 may be configured to calculate the imbalance of the wheel during one of its rotations based on the signal emitted by the imbalance sensor, and indicate one or more positions on the wheel at which to affix one or more balancing weights. In other words, the first control unit 21 may be configured to perform wheel balancing operations.

In accordance with Figure 13, the first control unit 21 is operatively connected to the rotation sensor 30: the first control unit 21 is then configured to receive the rotation signal from the rotation sensor 30 as input. The first control unit 21 is also operatively connected to the closure detector 18 of the safety cover: the first control unit 21 is then configured to receive as input the signal emitted by the closure detector 18.

In accordance with Figure 13, the power supply line 7 may be placed in between the electric motor 6 and the first control unit 21. Similarly, the power switch 8, such as a relay, is active on the electric supply line 7 and interposed between the electric motor 6 and the first control unit 21.

In contrast, the second control unit 22 may be, in a non-limiting way, analog. The second control unit 22 is distinct and physically separate (and optionally also spatially distant) from the first control unit 21. In fact, the first control unit 21 and the second control unit 22 are operationally independent of each other.

The second control unit 22 may be operatively connected to the locking system 10 and configured to move the locking system 10 between the unlock position and the lock position. In an embodiment, the locking system 10 may be controlled by the second control unit 22 only. The first control unit 21 may then be operationally separated from the locking system 10.

In accordance with Figure 13, the second control unit 22 may be operatively connected to rotation sensor 30: the second control unit 22 is then configured to receive the rotation signal of rotation sensor 30 as an input. In particular, the first control unit 21 and the second control unit 22 both receive the rotation signal from the rotation sensor as input.

The second control unit 22 may then be configured to calculate, based on the rotation signal, the rotation parameter of the wheel hub 2. The second control unit 22 may also be configured to move 103 the locking system 10 from the unlock position to the lock position, if the rotation parameter of the wheel hub 2 is greater than the respective predefined threshold. Conversely, if the rotation parameter of the wheel hub 2 is less than the respective predefined threshold, the second control unit 22 may command to move 103 the locking system 10 from the lock position to the unlock position. In fact, the second control unit may then be configured to perform the safety procedure 100.

The second control unit 22 may also be operatively connected to the closure detector 18 of the safety cover: the second control unit 22 is then configured to receive the signal emitted by the closure detector 18 as input. Optionally, both the first control unit 21 and the second control unit 22 may receive the signal from the closure detector as input.

The second control unit 22 may also be operatively connected to the lock sensor 17 and configured to receive as input the locking signal representative of the position assumed by the locking system 10 between the lock position and the unlock position. The second control unit 22 is then configured to determine, based on the locking signal, whether the locking system 10 is in the lock position or the unlock position.

The second control unit 22 may also be configured to selectively allow and interdict an electric power supply to the electric motor 6 of the wheel hub 2. In this regard, the second control unit 22 may be configured to control the power switch 7 between an open condition, suitable for interdicting an electric power supply to the electric motor 6, and a closed condition suitable for allowing an electric power supply to the electric motor 6. In more detail, the second control unit 22 may be configured to:

> verify the existence of a safe condition,
> if the safety condition is met, command power switch 7 in the closed condition,
> if the safety condition is not met, define a dangerous condition comprising at least one of controlling said power switch in the open condition, and activating an alarm signal.

Note that the second control unit 22 may then be pre-positioned to evaluate the occurrence of the previously described safety condition. In detail, the second control unit 22 may be configured to determine what is the position of the safety cover 3, between the distal position and the proximal position, by means of the signal from the closure detector 18. Similarly, the second control unit 22 may be configured to determine what is the position of the locking system 10, between the lock position and the unlock position by the signal emitted by the lock sensor 17.

The second control unit 22 may then be configured to perform the auxiliary safety procedure 104.

Similarly, the second control unit 22 may be configured to perform auxiliary safety verification 204. Optionally, the second control unit 22 may be configured to perform both auxiliary safety procedure 104 and auxiliary safety verification 204.

The second control unit 22 may also be configured to perform the step 90 of verifying a position of the safety cover 3 between the proximal and distal positions, and to allow the locking system 10 to move 103 to the lock position if the second control unit 20 has determined that the safety cover 3 is in the proximal position.

The second control unit 22 may also comprise the previously described clock generator. The second control unit 22 is then configured to calculate the rotation speed of the wheel hub 2 as a function of the clock signal and the rotation signal emitted by the rotation sensor 30. Note that this embodiment is particularly effective, in terms of the accuracy of measuring the rotational speed of the wheel hub 2, when the second control unit is of the analog type.

The second control unit 22 may be of the non-programmable type, at least when the second control unit 22 is mounted on the apparatus 1. Wherein the second control unit 22 is of a digital type, that control unit 22 may comprise a protection designed to prevent an operator from reprogramming it. Wherein, on the other hand, the control unit 22 is analog, it too may be configured so that it cannot be reconfigurable or programmable.

Note that, in accordance with the embodiment in Figure 13, the first control unit 21 does not receive input signals from the second control unit 22. This prevents the second control unit 22 from interfering with the operations performed by the first control unit 21.

Similarly, the second control unit 22 does not receive input signals from the first control unit 21.

The first control unit 21 may also be configured to perform the repositioning procedure 300 previously described. The first control unit 21 may also be configured to perform the initialization procedure 400 previously described. In an alternative embodiment, the second control unit 22 may be configured to perform at least one of repositioning procedure 300 and initialization procedure 400.

**Claims**

1. Balancing apparatus (1) for wheels comprising:

   a wheel hub (2) movable by rotation about its own rotation axis (R), said wheel hub (2) being configured to removably engage a wheel and put said wheel in rotation about said rotation axis (R),
   a safety cover (3) for the wheel, said safety cover (3) comprising at least an active portion (4) movable towards and away from said wheel hub (2) between a distal position and a proximal position,
   a locking system (10) activable on said safety cover (3) and movable between:

      a lock position where the locking system (10) is configured to prevent the safety cover (3) from moving from the proximal position to the distal position, and
      an unlock position where the locking system (10) is configured to allow the safety cover (3) to move from the proximal position to the distal position.

2. Balancing apparatus according to claim 1 configured to perform a safety procedure (100) comprising at least one step of automatically moving the locking system (10) from the unlock position to the lock position at least in an operating condition of the apparatus, said operating condition of the apparatus comprising said wheel hub (2) rotating about its rotation axis (R).

3. Balancing apparatus according to claim 2, wherein

      said apparatus comprises at least one control unit (20) configured to perform said safety procedure (100), or
      said apparatus comprises a passive system configured to perform said safety procedure (100).

4. Balancing apparatus according to claim 2 or 3 comprising a control unit (20) and at least one rotation sensor (30) configured to emit a rotation signal representative of a rotation of said wheel hub (2) about its rotation axis (R),
   wherein said safety procedure (100) comprises:
   receive (101) said rotation signal as input from the rotation sensor (30),

      calculate (102) a wheel hub rotation parameter (2), based on said rotation signal,
      if said wheel hub rotation parameter (2) is greater than a respective predefined threshold, move (103) the locking system (10) from the unlock position to the lock position.

5. Balancing apparatus according to the preceding claim, wherein said rotation parameter includes an angular momentum of the wheel mounted on the wheel hub (2), wherein said control unit (20) is configured to calculate said angular momentum of the wheel based on an angular speed of the wheel, optionally based on an angular speed of the wheel and an overall mass of the wheel and a radius of said wheel,
   or wherein

said rotation parameter includes a wheel hub rotation speed (2), wherein said control unit (20) is configured to calculate said wheel rotation speed based on the rotation signal.

**6.** Balancing apparatus according to claim 4 or 5, wherein said control unit (20) is configured to perform an auxiliary safety verification (204) comprising at least the following steps:

if the wheel hub rotation parameter (2) is greater than a predefined auxiliary threshold, verify (205) the existence of a safe condition, wherein said predefined auxiliary threshold is greater than said predefined threshold,
if the safety condition is met, allow (206) a rotation of the wheel hub (2) beyond said predefined auxiliary threshold,
if the safety condition is not met, prevent (207) the rotation of the wheel hub (2) beyond the predefined auxiliary threshold and/or emit an alarm signal,
wherein said safety condition is verified at least when the safety cover (3) is arranged in the proximal position.

**7.** Balancing apparatus according to the preceding claim comprising an electric motor (6) operatively connected to said wheel hub (2) and configured to rotate said wheel hub (2),
wherein the safety condition is verified when:

said electric motor (6) is electrically powered,
the locking system (10) is placed in the lock position,
the locking system (10) is electrically powered.

**8.** Balancing apparatus according to any one of the preceding claims in combination with claim 3, wherein said balancing apparatus comprises at least one closure detector (18) configured to selectively emit a signal representative of whether the safety cover (3) is in the proximal position or the distal position,
wherein said control unit (20) is operatively connected with the at least one closure detector (18) and configured to:

receive said signal from said closure detector (18),
determine whether the safety cover (3) is in the proximal or distal position,
and wherein said control unit (20) is configured to start the safety procedure (100) only if the safety cover (3) is in the proximal position.

**9.** Balancing apparatus according to any one of the preceding claims in combination with claim 3, wherein said control unit (20) comprises a first control unit

(21) and a second control unit (22), wherein:

the first control unit (21) is configured to perform a wheel balancing procedure,
the second control unit (22) is configured to move the locking system (10) between the unlock position and the lock position,

wherein the locking system (10) is controlled by said second control unit (22) only.

**10.** Balancing apparatus according to claim 9, wherein the first control unit (21) is of the digital type, and wherein the second control unit (22) is of the analog type,

and wherein the first control unit (21) and the second control unit (22) are operationally independent of each other,
wherein the second control unit (22) is of the non-programmable type,
said second control unit (22) being configured to perform the safety procedure (100).

**11.** Balancing apparatus according to claim 9 or 10, wherein said second control unit (22) comprises a clock generator configured to emit a clock signal having a frequency between 1kHz and 10kHz, optionally between 2kHz and 5kHz, optionally 3kHz, wherein said second control unit (22) is configured to determine the angular speed of the wheel hub (2) as a function of the rotation sensor signal and said clock signal.

**12.** Balancing apparatus according to any one of the preceding claims from 9 to 11, wherein said balancing apparatus (1) comprises a lock sensor (17), operatively connected to the second control unit (22), configured to emit a locking signal representative of a position of the locking system (10) between the lock position and the unlock position, wherein the second control unit (22) is configured to:

receive from the lock sensor (17) the locking signal,
determine, based on said locking signal, whether the locking system (10) is in the lock position or the unlock position.

**13.** Balancing apparatus according to any one of the preceding claims in combination with claim 3, wherein the active portion of the safety cover (3) has a distance from said wheel hub (2) that varies during movement of the safety cover (3) between the distal position and the proximal positions,
wherein:

when the safety cover (3) is in the distal position, said active portion of the safety cover (3) has a first distance from said wheel hub (2),
when the safety cover (3) is in the proximal position, said active portion of the safety cover (3) has a second distance, lower than said first distance, from said wheel hub (2),
wherein the safety cover (3) is movable between the distal position and the proximal position by rotation about a respective actuation axis (Y),
and wherein the safety cover (3) is configured to protect an operator during wheel balancing operations,
said apparatus comprises at least one actuator (11) operatively connected to said control unit (20) and configured to move the locking system (10) between the lock position and the unlock position.

14. Balancing apparatus according to any one of the preceding claims in combination with claim 3, wherein the control unit (20) is configured to perform a repositioning procedure (300) when the safety cover (3) is in the distal position, said repositioning procedure (300) comprising at least the following steps:

    detect the rotation parameter of the wheel hub (2),
    if the rotation parameter is greater than the predefined threshold along a wheel hub (2) angular rotation which is greater than a respective angular threshold, prevent the wheel hub (2) from rotating and/or emit an alarm signal,
    wherein said angular threshold is between 120° and 360°.

15. Wheel balancing method comprising the following steps:

    provide a balancing apparatus (1) comprising:

        a wheel hub (2) movable by rotation about a rotation axis,
        a safety cover (3) movable towards and away from said wheel hub (2) between a distal and a proximal position,

    arrange the safety cover in the distal position,
    engage a wheel (R) to the wheel hub (2),
    move the safety cover (3) from the distal position to the proximal position,
    perform a safety procedure that involves locking the safety cover (3) in the proximal position.

FIG.1

FIG.2

FIG.4

FIG.3

FIG.5

FIG.6

FIG.7

FIG.8

FIG.9

FIG.10

FIG.11

FIG.12

FIG.13

FIG.14

FIG.15

FIG.16

FIG.17

Europäisches
Patentamt

European
Patent Office

Office européen
des brevets

# EUROPEAN SEARCH REPORT

**Application Number**

EP 24 22 0380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/120188 A1 (CLASQUIN JOEL A [US] ET AL) 3 May 2018 (2018-05-03) | 1-5,8-15 | INV. G01M1/02 |
| A | * paragraphs [0001] - [0055]; figures 1-11 * | 6,7 | G01M1/22 F16P3/08 |
| | ----- | | |
| X | IT BO20 130 233 A1 (CORGHI SPA) 21 November 2014 (2014-11-21) | 1-5,9, 13,15 | |
| A | * paragraphs [0001] - [0135]; figures 1-7 * | 6,7 | |
| | ----- | | |
| A | US 6 354 151 B1 (FREYERMUTH ALAIN [FR] ET AL) 12 March 2002 (2002-03-12) * the whole document * | 1-15 | |
| | ----- | | |
| A | US 2002/000121 A1 (CARTER RONALD W [US] ET AL) 3 January 2002 (2002-01-03) * the whole document * | 1-15 | |
| | ----- | | |

|  |
|---|
| TECHNICAL FIELDS SEARCHED (IPC) |
| G01M F16P |

The present search report has been drawn up for all claims

| Place of search | Date of completion of the search | Examiner |
|---|---|---|
| The Hague | 21 January 2025 | Gassmann, Martin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 22 0380

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | | Publication date | Patent family member(s) | | Publication date |
|---|---|---|---|---|---|
| US 2018120188 | A1 | 03-05-2018 | NONE | | |
| IT BO20130233 | A1 | 21-11-2014 | | | |
| US 6354151 | B1 | 12-03-2002 | AT | E215868 T1 | 15-04-2002 |
| | | | CA | 2303136 A1 | 18-03-1999 |
| | | | DE | 69804817 T2 | 21-11-2002 |
| | | | DK | 1011917 T3 | 22-07-2002 |
| | | | EP | 1011917 A1 | 28-06-2000 |
| | | | ES | 2175764 T3 | 16-11-2002 |
| | | | FR | 2768072 A1 | 12-03-1999 |
| | | | JP | 2001515800 A | 25-09-2001 |
| | | | KR | 20010023797 A | 26-03-2001 |
| | | | PT | 1011917 E | 30-09-2002 |
| | | | US | 6354151 B1 | 12-03-2002 |
| | | | WO | 9912703 A1 | 18-03-1999 |
| US 2002000121 | A1 | 03-01-2002 | US | 5969247 A | 19-10-1999 |
| | | | US | 2002000121 A1 | 03-01-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018120188 A1